# EUROPÄISCHE PATENTSCHRIFT

(11) **EP 3 820 797 B1**
(45) Veröffentlichungstag und Bekanntmachung des Hinweises auf die Patenterteilung: **31.08.2022**
(21) Anmeldenummer: 19737508.2
(22) Anmeldetag: 04.07.2019
(51) Int. Cl.: B65G 47/96, B60T 7/00, F16D 59/02

(54) **FÖRDEREINRICHTUNG MIT MINDESTENS ZWEI FÖRDERWAGEN UND EINER ANTRIEBSSTRANGBREMSE FÜR EINEN QUERGURTFÖRDERER AN MINDESTENS EINEM DER FÖRDERWAGEN**
CONVEYOR DEVICE WITH AT LEAST TWO CONVEYOR CARRIAGES AND A POWERTRAIN BRAKE FOR A CROSS BELT CONVEYOR ON AT LEAST ONE OF THE CONVEYOR CARRIAGES
DISPOSITIF DE TRANSPORT MUNI D'AU MOINS DEUX CHARIOTS ET D'UN FREIN DE CHAÎNE CINÉMATIQUE D'UN CONVOYEUR À COURROIE TRANSVERSALE SUR AU MOINS UN DES CHARIOTS

(30) Priorität: 13.07.2018 DE 102018005570
(43) Veröffentlichungstag der Anmeldung: 19.05.2021
(73) Patentinhaber: Interroll Holding AG, 6592 Sant' Antonino (CH)
(72) Erfinder: EISINGER, Thomas, 74889 Sinsheim (DE); DROSTE, Heinrich, 74889 Sinsheim (DE)
(74) Vertreter: Kohlhof, Stephan
(86) Internationale Anmeldenummer: PCT/EP2019/067999
(87) Internationale Veröffentlichungsnummer: WO 2020/011643

(56) Entgegenhaltungen:
- EP-A2- 1 041 019
- WO-A1-02/24557

## Beschreibung

Die Erfindung betrifft eine Fördereinrichtung mit mindestens zwei Förderwagen und einer Antriebsstrangbremse für einen Quergurtförderer an mindestens einem der Förderwagen.

Bei einer solchen Fördereinrichtung ist mindestens einer der Förderwagen mit einem Quergurtförderer, d.h. mit einem quer zur Förderrichtung angeordneten und antreibbaren Quergurt, ausgestattet und die Förderwagen bevorzugt als umlaufende Wagenkette eingesetzt, um Stückgüter zur Hochleistungsverteilung in Post- und Distributionszentren aufzunehmen und zu befördern. Bei einer herkömmlichen Fördereinrichtung ist es üblich, bei dem Quergurtförderer eine von einer Hilfsenergie gespeiste separate Antriebsquelle zum Antreiben des Quergurts vorzusehen. Mit dieser Konfiguration ist der Quergurt beispielsweise mittels geeigneter Ansteuerung der Antriebsquelle während einer Kurvenfahrt bremsbar und/oder blockierbar, um zu verhindern, dass Fördergut von einem Förderwagen fällt und so ein Schaden an dem Fördergut, dem Förderwagen und/oder der Fördereinrichtung oder ggf. eine Gefahr für beteiligte Personen entstehen kann.

Jedoch bietet die Verwendung eines Quergurtförderers, dessen Quergurt ohne eine mit Hilfsenergie gespeiste Antriebsquelle angetrieben wird, erhebliche Vorteile wie beispielsweise einfachere Konstruktion und kein Erfordernis der Zuleitung der Hilfsenergie zu dem oder den beweglichen Förderwagen. Bei einem solchen Quergurtförderer ist der Quergurt beispielsweise mittels Laufrollen abgestützt und mittels Reibrollenantrieb angetrieben. Dabei wird dessen Reibrolle bei Vorbeifahrt mit dem Förderwagen an einer Ausschleusestation für das Fördergut mittels Abrollen an einem in Bezug auf den vorbeifahrenden Förderwagen stehenden Element angetrieben. Mit einer solchen Konfiguration stellt sich aber das Problem des wirkungsvollen Bremsens des Quergurts bei (Horizontal-)Kurvenfahrt. Insbesondere besteht dabei die Gefahr, dass der Quergurt durch das Gewicht des darauf gelagerten Förderguts und der daraus resultierenden Fliehkraft das Fördergut in ungewollter Weise bewegt wird, sodass das Fördergut vom Förderwagen fallen kann.

EP 1 041 019 offenbart eine Fördereinrichtung nach dem Oberbegriff des Anspruchs 1.

Vor diesem Hintergrund ist es eine Aufgabe der Erfindung, eine Fördereinrichtung mit mindestens zwei Förderwagen und einer Antriebsstrangbremse für einen Quergurtförderer an mindestens einem der Förderwagen zur Verfügung zu stellen, bei der eine Bremswirkung auf einen Antriebsstrang des Quergurtförderers verbessert, ein zuverlässiger Betrieb des Quergurtförderers gewährleistet und die Gefahr reduziert ist, dass Fördergut bei einer Kurvenfahrt vom Förderwagen fällt. Die Aufgabe wird durch die Gegenstände der unabhängigen Patentansprüche gelöst.

Bevorzugte Ausführungsformen ergeben sich aus den abhängigen Ansprüchen.

Ein Aspekt betrifft eine Fördereinrichtung mit mindestens einem ersten und einem zweiten Förderwagen, die in Förderrichtung hintereinander angeordnet sind, einem an mindestens dem zweiten Förderwagen ausgebildeten Quergurtförderer zum Fördern von Fördergut in einer im Wesentlichen quer zur Förderrichtung ausgerichteten Querförderrichtung und einer Antriebsstrangbremse für den Quergurtförderer. Die Antriebsstrangbremse weist eine Bremsvorrichtung und eine Bedienvorrichtung für die Bremsvorrichtung auf, wobei die Bedienvorrichtung an dem ersten Förderwagen und die Bremsvorrichtung an dem zweiten Förderwagen angeordnet ist. Die Bremsvorrichtung ist in einen Bremszustand bringbar, in dem die Bremsvorrichtung eine Bremskraft auf ein Element eines Antriebsstrangs des Quergurtförderers ausübt. Weiter ist die Bremsvorrichtung in einen Lösezustand bringbar, in dem die Bremsvorrichtung keine oder nur eine reduzierte Bremskraft auf ein Element eines Antriebsstrangs des Quergurtförderers ausübt. Die Bedienvorrichtung und die Bremsvorrichtung wirken derart zusammen, dass bei einer im Wesentlichen Geradeausfahrt des ersten und zweiten Förderwagens die Bremsvorrichtung den Lösezustand einnimmt und bei einer Kurvenfahrt mindestens einer der Förderwagen die Bremsvorrichtung den Bremszustand einnimmt, um eine Bewegung eines Quergurts des Quergurtförderers in Querförderrichtung bei Geradeausfahrt zuzulassen und bei Kurvenfahrt zu bremsen.

Ein Vorteil des Aspekts ist, dass bei Geradeausfahrt ein zuverlässiger Betrieb der Fördereinrichtung mit präzisem Ausschleusen von Fördergut auf dem Quergurtförderer durch die Antriebsstrangbremse nicht behindert und somit gewährleistet ist. Es besteht auch nicht mehr die Gefahr, dass ein Fördergut auf dem Förderwagen mit dem Quergurtförderer den Quergurt durch die bei Horizontalkurvenfahrt auf das Fördergut wirkende Fliehkraft antreibt und so ungewollt zum Kurvenäußeren befördert wird und evtl. vom Förderwagen fallen kann.

Ein weiterer Vorteil der vorliegenden Erfindung ist, dass eine verbesserte Bremswirkung auf den Antriebsstrang des Quergurtförderers erzielt werden kann, ohne einen erhöhten Verschleiß des Quergurts und/oder ohne Einsatz einer Hilfsenergie. Die vorliegende Erfindung macht sich insbesondere zu Nutze, dass die Förderwagen, also auch die jeweils daran angeordnete Bremsvorrichtung und Bedienvorrichtung, während einer Kurvenfahrt eine vorbestimmte bzw. vorbestimmbare relative Verlagerung bzw. einen relativen Versatz zueinander erfahren, wodurch die Bedienvorrichtung die Bremsvorrichtung betätigen kann.

Die Fördereinrichtung kann zum Transportieren von Fördergut in einer Förderrichtung mehrere Förderwagen aufweisen. Es können sämtliche Förderwagen der Fördereinrichtung jeweils sowohl eine Bremsvorrichtung als auch eine Bedienvorrichtung aufweisen, wobei die Reihe bzw. Kette der hintereinander angeordneten Förderwagen einen geschlossenen Ring entlang des Transportwegs bilden können. Die Fördereinrichtung kann im Verlauf ihres Transportwegs eine von einer Geraden abweichende Horizontalkurvenführung und/oder Vertikalkurvenführung, d.h. Links- und Rechtskurven sowie Bergauf- und Bergabpassagen, ggf. in Kombination, enthalten. Der Transportweg bzw. die Förderrichtung kann durch Transportschienen definiert sein, auf denen die Förderwagen mittels Rollen bzw. Rädern in Förderrichtung beweglich angeordnet sind. Zum Antrieb der Förderwagen können die Förderwagen jeweils mit einer Antriebskette verbunden sein, die im Wesentlichen dem Verlauf des Transportwegs folgend umläuft. Der Abstand der Förderwagen zueinander in Förderrichtung ist somit vorbestimmt bzw. vorbestimmbar.

Der Förderwagen der Fördereinrichtung kann zum Transportieren des Förderguts eine im Wesentlichen senkrecht zu einer Schwerkraftrichtung ausgebildete Förderfläche aufweisen, auf der das Fördergut aufgrund der auf das Fördergut wirkenden Schwerkraft abstellbar und somit mittels des Förderwagens transportierbar ist. Bei mehreren Förderwagen in der Fördereinrichtung weist mindestens einer der Förderwagen einen Quergurtförderer zum Fördern von Fördergut in einer Richtung quer zu der Förderrichtung der Fördereinrichtung auf.

Eine Förderebene ist definiert von der Förderfläche, die in der Förderebene liegt.

Der Quergurtförderer kann zur Ausschleusung von Fördergut in einer Querförderrichtung quer zu der Förderrichtung der Fördereinrichtung vorgesehen sein, wobei der Quergurt des Quergurtförderers in die jeweils gewünschte Querförderrichtung, insbesondere nach links oder rechts, antreibbar ist.

Die Antriebsstrangbremse kann eine Bremse sein, die auf ein Element eines Antriebsstrangs des Quergurtförderers wirkt.

Der Antriebsstrang des Quergurtförderers kann den Quergurt, zumindest eine Reibrolle und zumindest eine Gegendruckrolle aufweisen. Zum Antrieb des Quergurts kann die Gegendruckrolle zwischen den Umlenkrollen als eine der Laufrollen angeordnet sein, wobei der Quergurt zwischen der Gegendruckrolle und der parallel zu der Gegendruckrolle angeordneten Reibrolle geklemmt ist. Wenn die Reibrolle beispielsweise im Uhrzeigersinn drehend angetrieben wird, wird somit der Quergurt im Gegenuhrzeigersinn angetrieben. Der Reibrolle können weitere Elemente des Antriebsstrangs vorgeschaltet sein, beispielsweise ein oder mehrere Umlenkelement(e) und/oder Getriebeelement(e), die eine Übersetzung oder Untersetzung bewirken.

Unter dem Zusammenwirken von zwei oder mehreren Bauteilen und/oder Baugruppen im Sinne der vorliegenden Erfindung ist einerseits ein aktives Einwirken des einen Bauteils/der einen Baugruppe auf das/die andere zu verstehen. Andererseits ist darunter auch zu verstehen, dass das eine Bauteil/die eine Baugruppe das/die andere freigibt oder sich davon löst, um beispielsweise eine Vorspannung des anderen Bauteils/der anderen Baugruppe wirken zu lassen.

Die Förderrichtung ist die Richtung, in der die Förderwagen sich in der Fördereinrichtung fortbewegen. In dieser Beschreibung wird bei mehreren Förderwagen grundsätzlich die Förderrichtung des Förderwagens mit dem von der Bremsvorrichtung gebremsten Quergurt des Querförderers betrachtet.

Die Querförderrichtung ist die Richtung, in der der Quergurt angetrieben ist oder wird, wobei die Querförderrichtung senkrecht zu der Förderrichtung ausgerichtet und in der Förderebene liegt oder parallel zu der Förderebene ausgerichtet ist. In dieser Beschreibung wird bei mehreren mit Querförderern ausgebildeten Förderwagen grundsätzlich die Querförderrichtung des Querförderers mit dem zu bremsenden Quergurt betrachtet.

Bei der Fahrt der Förderwagen rechts/links/auf/ab kann die Bewegung der Förderwagen, und somit insbesondere auch die Bewegung der Bedienvorrichtung und der Bremsvorrichtung, aus einer Überlagerung von mehreren Bewegungsrichtungen, insbesondere sowohl translatorischen als auch rotatorischen Bewegungen, resultieren. In der vorliegenden Beschreibung soll aber lediglich die jeweils vorherrschende Bewegungsrichtung betrachtet werden, beispielsweise in Förderrichtung oder in Querförderrichtung.

Ein Querversatz der Förderwagen ist ein translatorischer Versatz der Förderwagen zueinander in Querförderrichtung. Bei einem Querversatz der Förderwagen zueinander sind die Förderwagen nicht zusammen hintereinander in Förderrichtung ausgerichtet.

Ein Winkelversatz der Förderwagen ist ein rotatorischer Versatz der Förderwagen zueinander mit einem Winkel, der in der Förderebene liegt oder parallel zu der Förderebene ausgerichtet ist. Mit anderen Worten haben die Förderwagen bei einem Winkelversatz eine durch einen Winkel voneinander abweichende Ausrichtung, wobei der Winkel in der Förderebene liegt oder parallel zu der Förderebene ausgerichtet ist. Bei einem Winkelversatz der Förderwagen zueinander sind die Förderwagen ebenfalls nicht genau hintereinander in Förderrichtung ausgerichtet.

Bei einer Geradeausfahrt sind die Förderwagen im Wesentlichen hintereinander in Förderrichtung ausgerichtet. Bei einer Kurvenfahrt zumindest einer der Förderwagen weisen die Förderwagen zueinander in Abhängigkeit von dem Kurvenverlauf typischerweise sowohl einen Querversatz als auch einen Winkelversatz auf.

Die Bremsvorrichtung und die Bedienvorrichtung sind insbesondere mechanische Vorrichtungen, die lediglich durch die relative Anordnung bzw. Verlagerung zueinander mechanisch zusammenwirken. Der Bremszustand kann als Zustand definiert werden, in dem die Bremsvorrichtung zumindest eine vorbestimmte bzw. vorbestimmbare Bremskraft auf das Element des Antriebstrangs des Quergurtförderers ausübt. Der Lösezustand kann als Zustand definiert werden, in dem die Bremsvorrichtung im Wesentlichen keine Bremskraft auf das Element des Antriebstrangs des Quergurtförderers ausübt. Die Bremsvorrichtung kann auch Zustände einnehmen bzw. in Zustände bringbar sein, die zwischen dem Bremszustand und dem Lösezustand liegen.

Die nachfolgend verwendeten Begriffe "hinten" oder "hinter" und dergleichen bedeuten im Sinne der vorliegenden Erfindung eine Richtung entgegen der Förderrichtung der Fördereinrichtung und/oder eine Lage eines Elements relativ zu einem anderen Element in Bezug auf die Förderrichtung. Die nachfolgend verwendeten Begriffe "vorne" oder "vor" und dergleichen bedeuten im Sinne der vorliegenden Erfindung eine Richtung in der Förderrichtung der Fördereinrichtung und/oder eine Lage eines Elements relativ zu einem anderen Element in Bezug auf die Förderrichtung.

Bevorzugt kann der erste Förderwagen mit der daran angeordneten Bedienvorrichtung dem zweiten Förderwagen mit der Bremsvorrichtung in Förderrichtung vorausfahrend angeordnet sein.

Mit anderen Worten kann der zweite Förderwagen mit der Bremsvorrichtung dem ersten Förderwagen mit der daran angeordneten Bedienvorrichtung in Förderrichtung nachfolgend angeordnet sein.

Mit dieser Konfiguration kann die Antriebsstrangbremse bereits aktiviert werden, wenn der vorausfahrende erste Förderwagen am Kurveneingang und der nachfolgende zweite Förderwagen mit dem zu bremsenden Quergurt noch kurz vor seiner Kurvenfahrt ist, sich also gerade noch in Geradeausfahrt befindet. Der nachfolgende Förderwagen kann somit mit bereits gebremstem Quergurt in die Kurve einfahren.

Alternativ dazu kann der erste Förderwagen mit der daran angeordneten Bedienvorrichtung dem zweiten Förderwagen mit der Bremsvorrichtung in Förderrichtung nachfolgend angeordnet sein. Mit anderen Worten kann alternativ die Bremsvorrichtung am in Förderrichtung vorausfahrenden zweiten Förderwagen vorgesehen sein und die Bedienvorrichtung am in Förderrichtung nachfolgenden ersten Förderwagen vorgesehen sein.

Bevorzugt kann die Bremsvorrichtung einen ersten Bremshebel mit einem daran angeordneten ersten Reibelement aufweisen, wobei der erste Bremshebel an dem zweiten Förderwagen schwenkbar gelagert ist.

Weiter bevorzugt kann im Bremszustand der Bremsvorrichtung der erste Bremshebel derart verschwenkt sein oder werden, dass das erste Reibelement an das Element des Antriebsstrangs gedrückt ist oder wird.

Bevorzugt kann die Antriebsstrangbremse mindestens ein elastisches Element aufweisen, mittels dessen Federkraft der erste Bremshebel im Bremszustand verschwenkt ist oder wird. Die in dieser Beschreibung verwendeten Begriffe "Bremszustand" und "Lösezustand" betreffen sowohl die entsprechenden Zustände der Bedienvorrichtung, der Bremsvorrichtung als auch die des ersten Bremshebels. Das elastische Element kann z.B. als eine Druckfeder ausgebildet sein.

Hierbei kann das elastische Element zumindest spielfrei in der Antriebsstrangbremse verbaut sein. Bevorzugt ist das elastische Element sogar vorgespannt innerhalb eines Bauteils der Antriebsstrangbremse, genauer der Bremsvorrichtung, verbaut. Bei der zumindest spielfreien Anordnung des elastischen Elements kann die Bremswirkung sofort bei Auslenkung zumindest eines der beiden Förderwagen eintreten. Bei der innerhalb eines Bauteils der Bremsvorrichtung vorgespannten Anordnung des elastischen Elements kann die Bremswirkung (abhängig von der jeweiligen Konfiguration und Anzahl elastischer Elemente) bei Auslenkung zumindest eines der beiden Förderwagen sofort verstärkt auftreten, d.h. der Bremshebel schnell kräftig an das gebremste Element des Antriebsstrangs angedrückt werden. Dabei kann das elastische Element innerhalb eines Bauteils der Bremsvorrichtung gespannt sein, ohne Belastung gegenüber der Bedienvorrichtung und/oder dem vorausfahrenden Förderwagen. Dies ermöglicht einen schnellen Eintritt der Bremswirkung. Das Bauteil der Bremsvorrichtung kann länglich ausgebildet sein, z.B. als Zugstab und/oder Stößel. Dabei kann das elastische Element insbesondere gegenüber einem Absatz und/oder anderem Hindernis an dem länglichen Bauteil vorgespannt sein, um eine Belastung der Bedienvorrichtung zu reduzieren.

Weiter bevorzugt kann das Element des Antriebsstrangs eine Gegendruckrolle für eine Reibrolle zum Antrieb des Quergurts sein.

Beispielsweise kann die Gegendruckrolle mit einem verzinkten Stahlrohr ausgebildet sein. Zusammen mit dem Reibelement, das beispielsweise als Gummireibbelag ausgebildet ist, kann einerseits eine verschleißarme Antriebsstrangbremse verwirklicht werden und andererseits eine ausreichende Bremskraft auf die Gegendruckrolle erzeugt werden. Eine ausreichende Bremskraft kann beispielsweise im Bereich von etwa 200 N liegen. Die Achse der Gegendruckrolle kann im Wesentlichen in Förderrichtung ausgerichtet sein. Die Gegendruckrolle kann in Querrichtung des Förderwagens im Wesentlichen mittig angeordnet sein. Die axiale Länge der Gegendruckrolle kann länger eingestellt sein als die Breite des Quergurts in Förderrichtung bzw. länger als die axiale Länge der Umlenkrollen des Quergurtförderers, so dass das Reibelement einfacher in Kontakt mit der Gegendruckrolle gebracht werden kann.

Vorteilhafterweise kann mittels vorbestimmbarer wirksamer Hebellängen an dem ersten Bremshebel eine definierte Bremskraft erzielt werden.

Bevorzugt kann der erste Bremshebel mit genau einem rotatorischen Freiheitsgrad um eine Hochachse - die senkrecht zu der Förderrichtung und senkrecht zu der Querförderrichtung ausgerichtet ist - und ohne einen translatorischen Freiheitsgrad an dem zweiten Förderwagen angebracht sein. Somit ist ein fester Drehpunkt definiert, um den herum der erste Bremshebel in einen Bremszustand und/oder in einen Lösezustand verschwenkbar ist.

Weiter bevorzugt kann der erste Bremshebel mittels der Bedienvorrichtung in den Bremszustand und/oder in den Lösezustand verschwenkbar sein.

Mit anderen Worten kann die Bedienungsvorrichtung aktiv die Bremsvorrichtung in den Bremszustand oder in den Lösezustand bringen, beispielsweise den ersten Bremshebel in den Bremszustand oder in den Lösezustand verschwenken, indem die Bedienvorrichtung, je nach Anordnung der Förderwagen zueinander, eine Kraft auf die Bremsvorrichtung und/oder den Bremshebel ausübt.

Alternativ oder zusätzlich dazu kann die Bremsvorrichtung passiv, beispielsweise mittels einer Freigabe des entsprechend vorgespannten ersten Bremshebels durch die Bedienungsvorrichtung, in den Bremszustand bringbar sein. Weiter kann die Bedienungsvorrichtung aktiv die Bremsvorrichtung in den Lösezustand bringen, beispielsweise den ersten Bremshebel in den Lösezustand verschwenken.

Bevorzugt kann die Antriebsstrangbremse derart konfiguriert sein, dass die Bremsvorrichtung mittels der Bedienvorrichtung bei einem Querversatz und/oder Winkelversatz der Förderwagen zueinander in den Bremszustand gebracht ist.

Mit anderen Worten kann die Antriebsstrangbremse derart konfiguriert sein, dass die Bedienungsvorrichtung aktiv die Bremsvorrichtung in den Bremszustand bringt, wenn die Förderwagen einen Querversatz oder einen Winkelversatz zueinander aufweisen, beispielsweise mittels Verschwenken des ersten Bremshebels in den Bremszustand, wenn die Förderwagen einen Querversatz oder einen Winkelversatz zueinander aufweisen.

Alternativ oder zusätzlich dazu kann die Antriebsstrangbremse derart konfiguriert sein, dass die Bremsvorrichtung passiv, beispielsweise mittels einer Freigabe des entsprechend vorgespannten ersten Bremshebels durch die Bedienungsvorrichtung, in den Bremszustand gebracht wird, wenn die Förderwagen einen Querversatz oder einen Winkelversatz zueinander aufweisen. Weiter kann die Bedienungsvorrichtung aktiv die Bremsvorrichtung in den Lösezustand bringen, beispielsweise den ersten Bremshebel in den Lösezustand verschwenken, wenn die Förderwagen keinen Querversatz oder Winkelversatz zueinander aufweisen.

Bevorzugt kann die Antriebsstrangbremse derart konfiguriert sein, dass die Bedienvorrichtung die Bremsvorrichtung ohne Querversatz und Winkelversatz der Förderwagen zueinander in den Lösezustand bringt.

Mit andern Worten kann die Antriebsstrangbremse derart konfiguriert sein, dass die Bedienvorrichtung bei miteinander ausgerichteten Förderwagen, d.h. wenn die beiden Förderwagen die gleiche Ausrichtung in Förderebene haben, die Bremsvorrichtung, insbesondere aktiv, in den Lösezustand bringt.

Mit wieder anderen Worten kann die Bremsvorrichtung mittels einer Querbewegung der Bedienvorrichtung, d.h. einer Bewegung der Bedienvorrichtung mit mindestens einem Anteil in Querförderrichtung, in Bezug auf die Bremsvorrichtung und/oder mittels eines Winkelversatzes der Förderwagen zueinander bedienbar sein. Der bei Kurvenfahrt der Förderwagen auftretende Winkelversatz zwischen den Förderwagen parallel zu der Förderebene bewirkt eine Querbewegung der Bedienvorrichtung und/oder einen Winkelversatz der Bedienvorrichtung parallel zu der Förderebene in Bezug auf Bremsvorrichtung. Der Richtungsanteil der Querbewegung und/oder des Winkelversatzes in Querförderrichtung ist zur Aktivierung oder Deaktivierung der Antriebsstrangbremse, mit anderen Worten zur Bedienung der Bremsvorrichtung, nutzbar.

Bevorzugt kann die Bremsvorrichtung zusätzlich zu dem ersten Bremshebel einen zweiten Bremshebel mit einem daran angeordneten zweiten Reibelement aufweisen. Somit kann eine Bremskraft in einer zweiten Richtung auf das Element des Antriebsstrangs erzeugt werden.

Weiter bevorzugt kann der erste Bremshebel einstückig mit dem zweiten Bremshebel ausgebildet sein, d.h. der erste und zweite Bremshebel sind Bestandteile desselben Bauteils. Somit kann eine Reduzierung der Bauteile der Bremsvorrichtung und/oder eine Vereinfachung der Montage der Bremsvorrichtung erreicht werden.

Die zu dem ersten Bremshebel beschriebenen Merkmale und die damit verbundenen Eigenschaften können auch auf den zweiten Bremshebel zutreffen. Dies kann sowohl für die Ausführungsform(en) gelten, bei der der erste und zweite Bremshebel einstückig ausgebildet sind, als auch für Ausführungsform(en), bei der der erste und zweite Bremshebel als Bestandteile separater Bauteile der Bremsvorrichtung ausgebildet sind.

Bevorzugt können die ersten und zweiten Bremshebel auf einander gegenüberliegenden Seiten des Elements des Antriebsstrangs angeordnet sein. Somit kann eine symmetrische Ausbildung und/oder eine Reduzierung einer Bauhöhe der Bremsvorrichtung erreicht werden.

Vorteilhafterweise sind die einstückig miteinander ausgebildeten ersten und zweiten Bremshebel in Förderrichtung gesehen spiegelbildlich zueinander ausgebildet.

Bevorzugt kann die Bedienvorrichtung ein oder mehrere Bedienelement(e) aufweisen, das/die mit jeweils mindestens zwei rotatorischen Freiheitsgraden um die Hochachse und um die Querförderrichtung und mit genau einem im Lösezustand etwa parallel zur Förderrichtung ausgerichteten translatorischen Freiheitsgrad an dem ersten Förderwagen angebracht ist/sind. Somit kann einerseits die Querbewegung und/oder der Winkelversatz zwischen dem ersten und zweiten Förderwagen ausgeglichen werden und somit die Bedienvorrichtung und/oder die Bremsvorrichtung vor Beschädigung bewahrt werden. Andererseits können aber auch die Querbewegung und/oder der Winkelversatz zwischen dem ersten und zweiten Förderwagen und somit zwischen der Bedienvorrichtung und der Bremsvorrichtung zum kontrollierten Aktivieren und/oder Deaktivieren der Antriebsstrangbremse genutzt werden.

Alternativ oder zusätzlich dazu kann die Bedienvorrichtung ein oder mehrere Bedienelement(e) aufweisen, das/die mit jeweils drei rotatorischen Freiheitsgraden und genau einem im Lösezustand etwa parallel zur Förderrichtung ausgerichteten translatorischen Freiheitsgrad an dem ersten Förderwagen angebracht ist/sind.

Bevorzugt kann die Bedienvorrichtung ein Bedienelement aufweisen, das ohne Freiheitsgrad an dem ersten Förderwagen angebracht ist. Somit ist je nach Ausgestaltung des Bedienelements eine zuverlässige Übertragung der Querbewegung und/oder des Winkelversatzes zwischen dem ersten und zweiten Förderwagen und somit zwischen der Bedienvorrichtung und der Bremsvorrichtung zum Aktivieren oder Deaktivieren der Antriebsstrangbremse unter Ermöglichen von konstruktiven Alternativen erzielbar.

Ein Aspekt betrifft eine Antriebsstrangbremse für einen Quergurtförderer einer Fördereinrichtung mit mindestens einem ersten und einem zweiten Förderwagen, die in Förderrichtung hintereinander angeordnet sind und dem an mindestens dem zweiten Förderwagen ausgebildeten Quergurtförderer zum Fördern von Fördergut in einer im Wesentlichen quer zur Förderrichtung ausgerichteten Querförderrichtung. Dabei weist die Antriebsstrangbremse eine Bremsvorrichtung und eine Bedienvorrichtung für die Bremsvorrichtung auf, wobei die Bedienvorrichtung an dem ersten Förderwagen und die Bremsvorrichtung an dem zweiten Förderwagen angeordnet ist. Die Bremsvorrichtung ist in einen Bremszustand bringbar, in dem die Bremsvorrichtung eine Bremskraft auf ein Element eines Antriebsstrangs des Quergurtförderers ausübt, und in einen Lösezustand bringbar, in dem die Bremsvorrichtung keine oder eine reduzierte Bremskraft auf ein Element eines Antriebsstrangs des Quergurtförderers ausübt. Die Bedienvorrichtung und die Bremsvorrichtung wirken derart zusammen, dass bei einer im Wesentlichen Geradeausfahrt des ersten und zweiten Förderwagens die Bremsvorrichtung den Lösezustand einnimmt und bei einer Kurvenfahrt mindestens eines der Förderwagen die Bremsvorrichtung den Bremszustand einnimmt, um eine Bewegung eines Quergurts des Quergurtförderers in Querförderrichtung bei Geradeausfahrt zuzulassen und bei Kurvenfahrt zu bremsen.

Auf diesen Aspekt treffen auch die Ausführungen zum voranstehend beschriebenen Aspekt zu.

Nachfolgend sind Ausführungsbeispiele der erfindungsgemäßen Fördereinrichtung und der erfindungsgemäßen Antriebsstrangbremse anhand von Zeichnungen näher erläutert. Es zeigen:
- Fig. 1: eine Draufsicht einer Fördereinrichtung gemäß einem ersten Ausführungsbeispiel der Erfindung mit zwei Förderwagen in Geradeausfahrt,
- Fig. 2: eine Draufsicht der Fördereinrichtung gemäß Fig. 1 mit zwei Förderwagen in Kurvenfahrt,
- Fig. 3: eine vergrößerte Ansicht des Details A gemäß Fig. 1 bei Geradeausfahrt der zwei Förderwagen,
- Fig. 4: eine vergrößerte Ansicht des Details B gemäß Fig. 2 bei Kurvenfahrt der zwei Förderwagen,
- Fig. 5: eine Draufsicht einer Fördereinrichtung gemäß einem zweiten Ausführungsbeispiel der Erfindung mit zwei Förderwagen in Geradeausfahrt,
- Fig. 6: eine Draufsicht einer Fördereinrichtung gemäß Fig. 5 mit zwei Förderwagen in Kurvenfahrt,
- Fig. 7: eine vergrößerte Ansicht des Details B gemäß Fig. 5 bei Geradeausfahrt der zwei Förderwagen,
- Fig. 8: eine vergrößerte Ansicht des Details A gemäß Fig. 6 bei Kurvenfahrt der zwei Förderwagen,
- Fig. 9: eine Draufsicht einer Fördereinrichtung gemäß einem dritten Ausführungsbeispiel der Erfindung mit zwei Förderwagen in Geradeausfahrt,
- Fig. 10: eine Draufsicht einer Fördereinrichtung gemäß Fig. 9 mit zwei Förderwagen in Kurvenfahrt,
- Fig. 11: eine vergrößerte Ansicht des Details B gemäß Fig. 9 bei Geradeausfahrt der zwei Förderwagen,
- Fig. 12: eine vergrößerte Ansicht des Details A gemäß Fig. 10 bei Kurvenfahrt der zwei Förderwagen,
- Fig. 13: eine Draufsicht einer Fördereinrichtung gemäß einem vierten Ausführungsbeispiel der Erfindung mit zwei Förderwagen in Geradeausfahrt,
- Fig. 14: eine Draufsicht einer Fördereinrichtung gemäß Fig. 13 mit zwei Förderwagen in Kurvenfahrt,
- Fig. 15: eine vergrößerte Ansicht des Details B gemäß Fig. 13 bei Geradeausfahrt der zwei Förderwagen und
- Fig. 16: eine vergrößerte Ansicht des Details A gemäß Fig. 14 bei Kurvenfahrt der zwei Förderwagen,

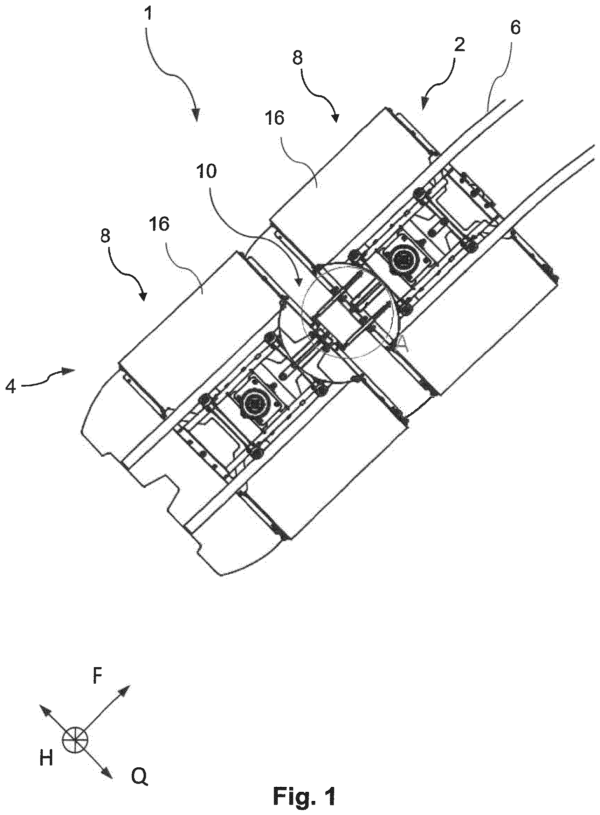

Die in **Fig. 1** in einer Draufsicht dargestellte Fördereinrichtung 1 gemäß einem ersten Ausführungsbeispiel der Erfindung mit zwei Förderwagen 2, 4 in Geradeausfahrt hat einen ersten Förderwagen 2 und einen zweiten Förderwagen 4, die zueinander in Förderrichtung F hintereinander auf Transportschienen 6 angeordnet sind.

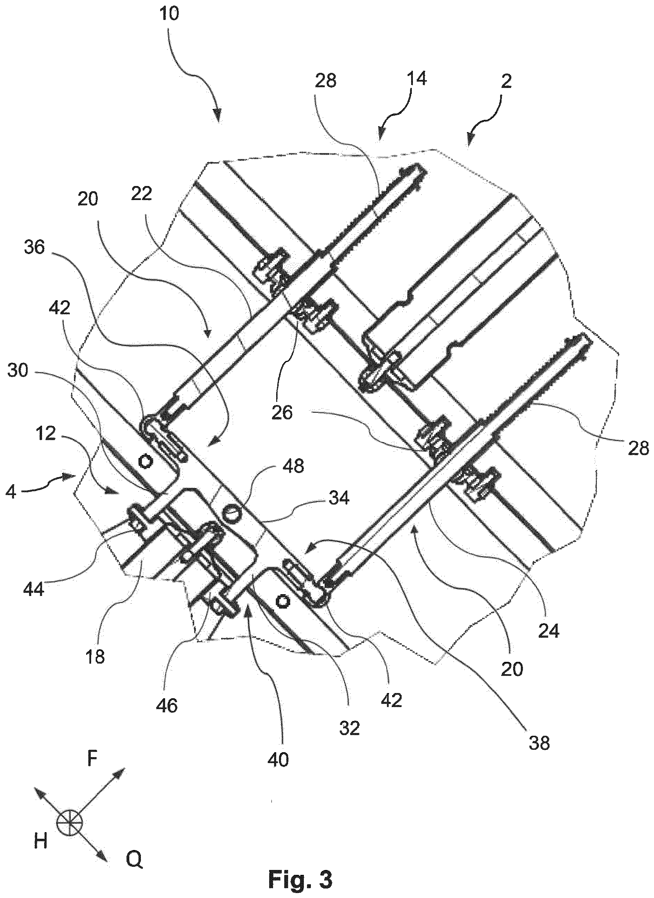

Beide Förderwagen 2, 4 haben in dem ersten Ausführungsbeispiel einen Quergurtförderer 8 und es ist eine Antriebsstrangbremse 10 für den Quergurtförderer 8 vorgesehen, wobei die Antriebsstrangbremse 10 eine Bremsvorrichtung 12 und eine Bedienvorrichtung 14 (siehe Fig. 3) für die Bremsvorrichtung 12 aufweist. Der in Förderrichtung F vorausfahrende erste Förderwagen 2 weist die Bedienvorrichtung 14 auf und der dem ersten Förderwagen 2 nachfolgend angeordnete zweite Förderwagen 4 weist die Bremsvorrichtung 12 auf.

Bei Verwendung von mehr als zwei Förderwagen 2, 4 in der Fördereinrichtung 1 kann, anders als in Fig. 1 dargestellt, der erste Förderwagen 2 zusätzlich eine Bremsvorrichtung aufweisen, die an eine Bedienvorrichtung eines vorausfahrenden Förderwagens gekoppelt und/oder koppelbar ist, und der zweite Förderwagen 4 zusätzlich eine Bedienvorrichtung aufweisen, die an eine Bremsvorrichtung eines in Förderrichtung nachfolgenden Förderwagens gekoppelt und/oder koppelbar ist.

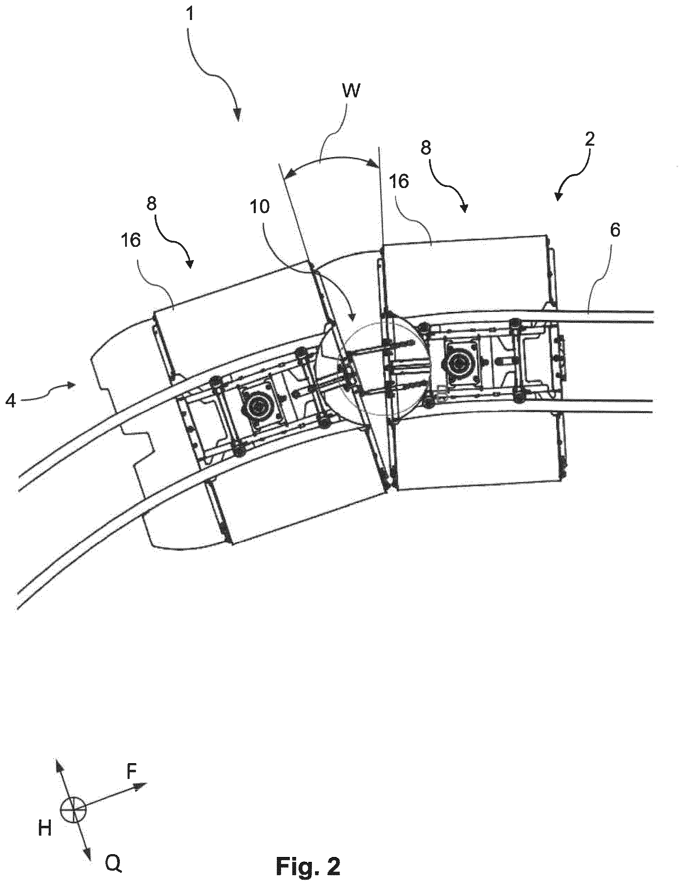

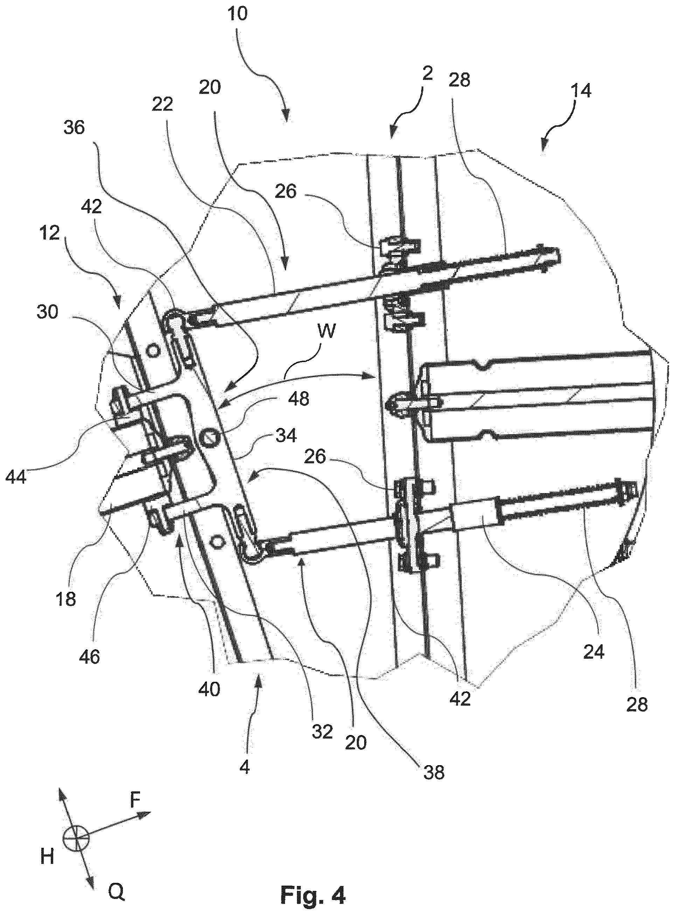

Beide Förderwagen 2, 4 sind in Geradeausfahrt dargestellt und sind zusammen in Förderrichtung ausgerichtet, weisen also weder einen Querversatz noch einen (in Fig. 2 und Fig. 4 dargestellten) Winkelversatz W zueinander auf. Somit ist die Bremsvorrichtung 12 mittels der Bedienvorrichtung 14 in einen in Fig. 3 vergrößert dargestellten Lösezustand verschwenkt und/oder umgerichtet, in dem keine (oder nur eine reduzierte) Bremskraft auf ein Element eines Antriebsstrangs des Quergurtförderers 8 ausgeübt ist.

Bei dem ersten Ausführungsbeispiel ist das Element des Antriebsstrangs, auf das die Bremskraft ausgeübt wird, eine Gegendruckrolle 18 (siehe Fig. 3) zu einer (nicht dargestellten) Reibrolle zum Antrieb des Quergurts 16. Allgemein kann das Element des Antriebsstrangs als "gebremstes Element des Antriebsstrangs" bezeichnet werden.

Bei der in Fig. 2 dargestellten Draufsicht der Fördereinrichtung 1 gemäß Fig. 1 mit zwei Förderwagen 2, 4 in Kurvenfahrt weisen die Förderwagen 2, 4 einen Winkelversatz W zueinander auf. Somit ist die Bremsvorrichtung 12 mittels der Bedienvorrichtung 14 in einen in Fig. 4 vergrößert dargestellten Bremszustand verschwenkt, in dem eine Bremskraft auf die Gegendruckrolle 18 ausgeübt ist.

Der Winkelversatz W zwischen den Querförderrichtungen Q der beiden Förderwagen 2, 4 ist etwa so groß wie der Winkelversatz W zwischen den Förderrichtungen F der beiden Förderwagen 2, 4. In den Zeichnungen ist jeweils nur ein Winkelversatz W angegeben.

In der in Fig. 3 gezeigten vergrößerten Ansicht des Details A gemäß Fig. 1 ist die Antriebsstrangbremse 10 und somit die Bedienvorrichtung 14 und die Bremsvorrichtung 12 bei Geradeausfahrt der zwei Förderwagen 2, 4 im Lösezustand dargestellt, der nachfolgend beschrieben wird:
Die Bedienvorrichtung 14 weist in dem ersten Ausführungsbeispiel zwei Bedienelemente 20 auf, die in dem ersten Ausführungsbeispiel als ein erster Zugstab 22 und ein zweiter Zugstab 24 ausgebildet sind. Die Zugstäbe 22, 24 sind jeweils etwa parallel zur Förderrichtung F und somit auch parallel zueinander ausgerichtet. Die Zugstäbe 22, 24 sind mit jeweils drei rotatorischen Freiheitsgraden und genau einem translatorischen Freiheitsgrad parallel zur Förderrichtung F an dem ersten Förderwagen 2 angebracht und/oder gelagert. Wie hier dargestellt, können die Zugstäbe 22, 24 beispielsweise mittels eines Flanschlagers 26 mit Kugelkalotte an dem ersten Förderwagen 2 angebracht sein, wobei ein freies Ende des jeweiligen Zugstabs 22, 24, das in einen Bereich des ersten Förderwagens 2 hineinragt, längsverschieblich in der Kugelkalotte aufgenommen ist.

Jeder der Zugstäbe 22, 24 ist mittels eines elastischen Elements 28 mit seinem in den Bereich des ersten Förderwagens ragenden freien Ende gegen einen Absatz am jeweiligen Zugstab 22, 24 vorgespannt. Bei der in Fig. 3 gezeigten Fahrt geradeaus kann das elastische Element 28 zwischen dem freien Ende und einer Scheibe vorgespannt sein. Die Scheibe weist einen Innendurchmesser auf, der kleiner ausgebildet ist als ein Außendurchmesser eines am Zugstab 22 und 24 ausgebildeter Absatz (oder ein anderes Hindernis), so dass die Scheibe in Richtung zum Flanschlager 26 hin nicht über diesen Absatz hinweg bewegt werden kann. In der in Fig. 3 gezeigten Fahrt geradeaus ist das elastische Element 28 somit innerhalb des Zugstabs 22 und 24 vorgespannt, nicht aber gegen den Förderwagen 2 und/oder das Flanschlager 26. Zwischen der Scheibe und dem Flanschlager 26 kann noch ein axial verschiebbarer Zylinder über dem jeweiligen Zugstab 22 und 24 angeordnet sein, der die Feder gegen das Flanschlager 26 abstützt. Dabei ist bei Fahrt geradeaus ein Spiel zwischen dem Zylinder und dem Flanschlager 26 ausgebildet.

Die Vorspannung innerhalb der beiden Zugstäbe 22 und 24 ermöglicht es, dass die Bremswirkung aufgrund der Vorspannung einerseits und des Spiels andererseits bei Eintreten eines Winkel- und/oder Querversatzes praktisch sofort eintreten kann.

Dabei ist die Vorspannung innerhalb des ersten Zugstabs 22 bevorzugt gleich groß ist wie die Vorspannung innerhalb des zweiten Zugstabs 24. In dem ersten Ausführungsbeispiel ist das elastische Element 28 als Druckfeder ausgebildet.

Die Bremsvorrichtung 12 weist in dem ersten Ausführungsbeispiel einen ersten Bremshebel 30 und einen einstückig damit ausgebildeten zweiten Bremshebel 32 auf.

Bevorzugt ist somit ein etwa T-förmiger Hebel ausgebildet, der an einem Quersteg 34 der T-Form in Querförderrichtung Q einander gegenüberliegende erste und zweite

Endabschnitte 36, 38 aufweist. Ein Längssteg 40 der T-Form ist von jeweils einem ersten und zweiten Längsabschnitt der Bremshebel 30, 32 ausgebildet. Dabei sind die beiden Längsabschnitte etwa parallel zueinander angeordnet und in Querförderrichtung Q voneinander beabstandet.

Die Zugstäbe 22, 24 sind jeweils an die Endabschnitte 36, 38 des T-förmigen Hebels mit den Bremshebeln 30, 32 gekoppelt, wobei die Zugstäbe 22, 24 an diesem Koppelende drei rotatorische Freiheitsgrade und keinen translatorischen Freiheitsgrad aufweisen. Wie hier dargestellt, können die Zugstäbe 22, 24 an ihrem dem freien Ende gegenüberliegenden Ende beispielsweise mittels Kugelgelenkköpfen 42 mit den Bremshebeln 30, 32 gekoppelt sein.

Die Bremshebel 30, 32 sind mit genau einem rotatorischen Freiheitsgrad um eine Hochachse H und ohne einen translatorischen Freiheitsgrad an dem zweiten Förderwagen 4 angebracht. Die Hochachse H ist senkrecht zu der Förderrichtung F und senkrecht zu der Querförderrichtung Q ausgerichtet und verläuft durch einen Drehpunkt 48.

An den Bremshebeln 30, 32, insbesondere an Längsabschnitten der Bremshebel 30, 32, sind jeweils als Gummireibbelag ausgebildete erste und zweite Reibelemente 44, 46 ausgebildet. Die Reibelemente 44, 46 können derart angeordnet sein, dass sie von einander in Querförderrichtung Q gegenüberliegenden Seiten auf die Gegendruckrolle 18 wirken können. Die Reibelemente 44, 46 haben in dem dargestellten Lösezustand keinen Kontakt mit der Gegendruckrolle 18, es wird also keine Bremskraft auf die Gegendruckrolle 18 ausgeübt.

In der in Fig. 4 gezeigten vergrößerten Ansicht des Details B gemäß Fig. 2 ist die Antriebsstrangbremse 10 und somit die Bedienvorrichtung 14 und die Bremsvorrichtung 12 bei Kurvenfahrt der zwei Förderwagen 2, 4 im jeweiligen Bremszustand dargestellt, der nachfolgend beschrieben wird:
Im dargestellten Bremszustand weist der vorausfahrende erste Förderwagen 2 mit der Bedienvorrichtung 14 zu dem nachfolgenden zweiten Förderwagen 4 mit der Bremsvorrichtung 12 einen Winkelversatz W auf. Der Winkelversatz W resultiert aus der dargestellten Kurvenfahrt der beiden Förderwagen 2, 4, wobei lediglich einer der beiden Förderwagen 2, 4 sich in Kurvenfahrt befinden muss, um den Winkelversatz W zu erzeugen.

In Kurvenfahrt der Förderwagen 2, 4 in einer Rechtskurve betrachtet, sind der erste Bremshebel 30 mit dem ersten Reibelement 44 und der erste Zugstab 22 auf einer kurvenäußeren Seite und der zweite Bremshebel 32 mit dem zweiten Reibelement 46 und der zweite Zugstab 24 auf einer kurveninneren Seite der Förderwagen 2, 4 angeordnet.

Der erste Förderwagen 2 ist somit im Bereich des ersten Zugstabs 22 weiter von dem zweiten Förderwagen 4 entfernt als im Bereich des zweiten Zugstabs 24.

Wegen der oben erwähnten rotatorischen und translatorischen Freiheitsgrade, mit denen die Zugstäbe 22, 24 jeweils an dem ersten Förderwagen 2 angeordnet sind, sind die Zugstäbe 22, 24 bei Kurvenfahrt in einer von der Förderrichtung F abweichenden Ausrichtung ausgerichtet, wobei der kurvenaußenseitige Zugstab, hier der erste Zugstab 22, weiter aus dem Bereich des ersten Förderwagens 2 herausgezogen wird als der kurveninnenseitige Zugstab, hier der zweite Zugstab 24, welcher weiter in den Bereich des ersten Förderwagens 2 hineingedrückt ist oder wird.

Somit ist das elastische Element 28 des ersten Zugstabs 22 von dem ersten Förderwagen 2 zusammengedrückt, wodurch ein Zug auf den ersten Bremshebel 30 ausgeübt ist oder wird. In der Fig. 4 ist das als Druckfeder ausgebildete elastische Element 28 an dem ersten Zugstab 22 aufgrund eines Zeichenfehlers nicht zusammengedrückt dargestellt, auch wenn es tatsächlich sehr wohl zusammengedrückt ist zwischen der am Absatz des Zugstabs 22 anstoßenden Scheibe und dem freien Ende des Zugstabs 22. Dabei ist die Scheibe vom Zylinder in Richtung zum freien Ende verschoben, welcher sich wiederum am Flanschlager 26 abstützt.

Der Zylinder am kurveninneren Zugstab (hier der Zustab 24) ist hierbei unbelastet und über ein in der Kurve vergrößertes Spiel hinweg verschiebbar.

Die Antriebsstrangbremse 10 ist gemäß des ersten Ausführungsbeispiels derart konfiguriert, dass - in der dargestellten Draufsicht auf eine Einbaulage der Bremshebel 30, 32 gesehen - wenn der erste Förderwagen 2 die Kurvenfahrt im Uhrzeigersinn macht, die Bremshebel 30, 32 im Uhrzeigersinn um den festen Drehpunkt 48 verschwenkt sind oder werden, wobei das kurveninnere zweite Reibelement 46 an das gebremste Element des Antriebsstrangs, hier die Gegendruckrolle 18, gedrückt ist oder wird. Wenn der erste Förderwagen 2 die Kurvenfahrt im Gegenuhrzeigersinn macht, sind oder werden die Bremshebel 30, 32 im Gegenuhrzeigersinn verschwenkt, wobei das kurvenäußere erste Reibelement 44 an das gebremste Element des Antriebsstrangs, d.h. die Gegendruckrolle 18, gedrückt ist oder wird.

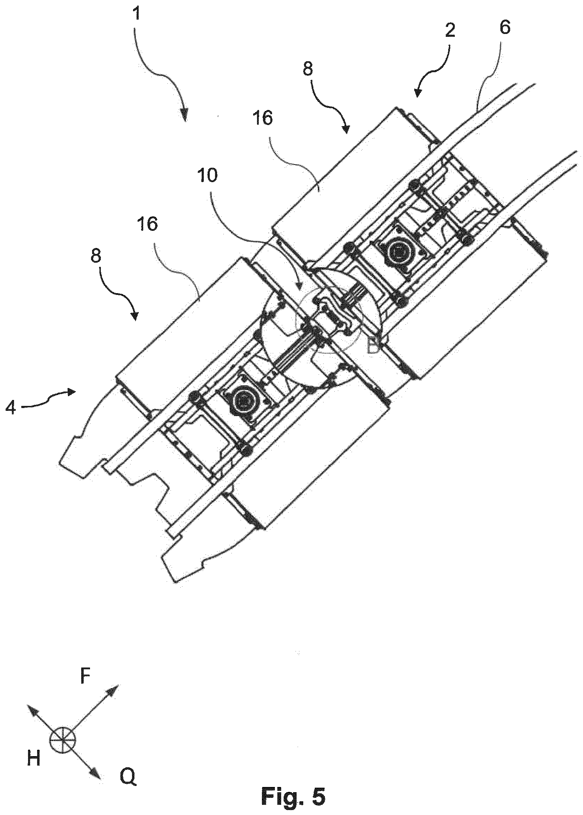

Die in den **Fig. 5** bis **Fig. 8** dargestellte Fördereinrichtung 1 gemäß einem zweiten Ausführungsbeispiel der Erfindung mit zwei Förderwagen 2, 4 weicht in der Ausgestaltung der Antriebsstrangbremse 10 von der oben beschriebenen Fördereinrichtung 1 gemäß dem ersten Ausführungsbeispiel ab. Nachfolgend werden die Abweichungen davon beschrieben, wobei gleiche oder ähnliche Bauteile mit denselben Bezeichnungen beschrieben werden.

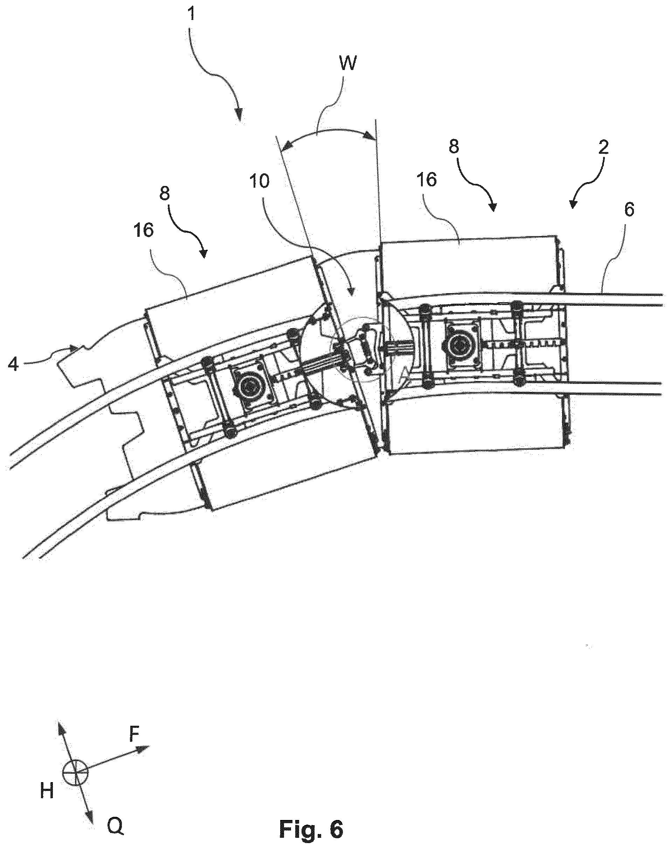

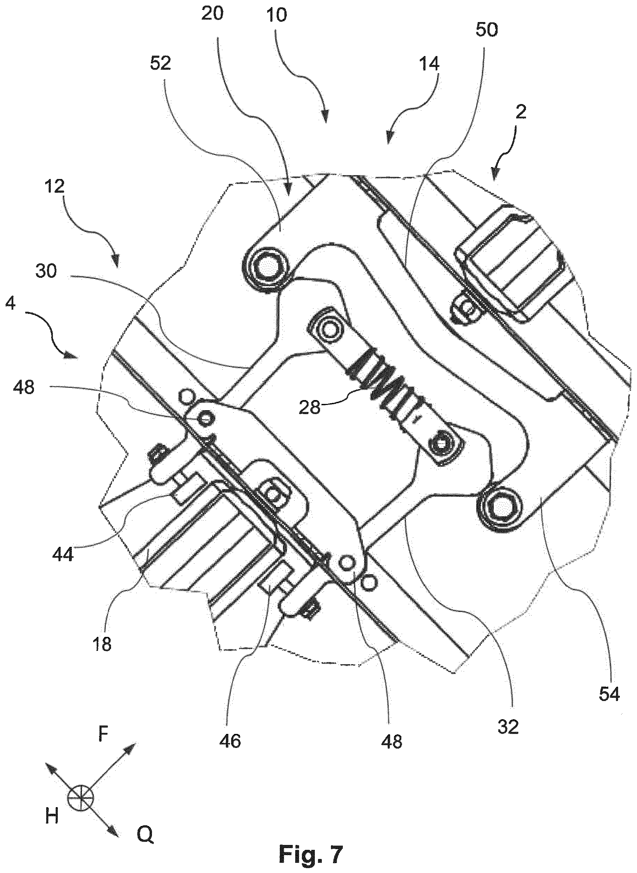

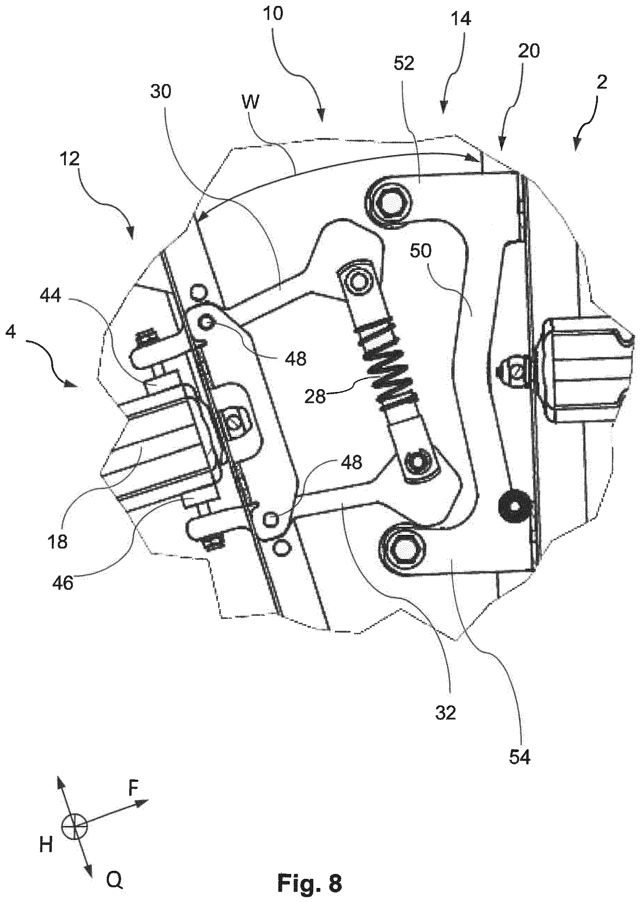

Die in **Fig. 5** in der Draufsicht gezeigten zwei Förderwagen 2, 4 sind in Geradeausfahrt dargestellt und sind zusammen in Förderrichtung F ausgerichtet, weisen also weder einen Querversatz noch einen (in Fig. 6 und Fig. 8 dargestellten) Winkelversatz W zueinander auf. Somit ist die Bremsvorrichtung 12 mittels der Bedienvorrichtung 14 in einen in Fig. 7 vergrößert dargestellten Lösezustand verschwenkt, in dem keine Bremskraft auf das Element des Antriebsstrangs des Quergurtförderers, insbesondere auf die Gegendruckrolle 18, ausgeübt ist.

Bei der in **Fig. 6** dargestellten Draufsicht der Fördereinrichtung 1 gemäß Fig. 5 mit zwei Förderwagen 2, 4 in Kurvenfahrt weisen die Förderwagen 2, 4 einen Winkelversatz W zueinander auf. Somit ist die Bremsvorrichtung 12 mittels der Bedienvorrichtung 14 in einen in Fig. 8 vergrößert dargestellten Bremszustand verschwenkt, in dem eine Bremskraft auf die Gegendruckrolle 18 ausgeübt ist.

In der in **Fig. 7** gezeigten vergrößerten Ansicht des Details B gemäß Fig. 5 ist die Antriebsstrangbremse 10 und somit die Bedienvorrichtung 14 und die Bremsvorrichtung 12 bei Geradeausfahrt der zwei Förderwagen 2, 4 im jeweiligen Lösezustand dargestellt, der nachfolgend beschrieben wird:
Die Bedienvorrichtung 14 weist in dem zweiten Ausführungsbeispiel ein Bedienelement 20 auf, das in dem zweiten Ausführungsbeispiel als ein U-förmiger Bügel 50 ausgebildet ist. Der Bügel 50 weist in Querförderrichtung Q voneinander beabstandet einen ersten Flanschabschnitt 52 und einen zweiten Flanschabschnitt 54 auf, die etwa in Förderrichtung F des ersten Förderwagens 2 ausgerichtet sind. In Einbaulage des Bügels 50 zeigen die Flanschabschnitte 52, 54 auf den zweiten Förderwagen 4. Der Bügel 50 ist ohne jeglichen Freiheitgrad an dem ersten Förderwagen 2 angebracht.

Die Bremsvorrichtung 12 weist in dem zweiten Ausführungsbeispiel einen ersten Bremshebel 30 und einen zweiten Bremshebel 32 auf, die in Querförderrichtung Q voneinander beabstandet an dem zweiten Förderwagen 4 angebracht sind. Die Bremshebel 30, 32 weisen jeweils genau einen rotatorischen Freiheitsgrad um die Hochachse H auf und keinen translatorischen Freiheitsgrad.

Die Bremshebel 30, 32 sind an ihren der Bedienvorrichtung 14 zugewandten Endabschnitten gegeneinander mit einem elastischen Element 28 vorgespannt, das in dem zweiten Ausführungsbeispiel als eine Druckfeder ausgebildet ist.

Entgegen der Vorspannung sind die Bremshebel 30, 32 bei Geradeausfahrt der beiden Förderwagen 2, 4 von der Bedienvorrichtung 14, insbesondere von dem U-förmigen Bügel 50 und seinen Flanschabschnitten 52, 54, in einem Lösezustand gehalten, in dem die Reibelemente 44, 46 keinen Kontakt mit der Gegendruckrolle 18 haben. Es wird im Lösezustand also keine Bremskraft auf die Gegendruckrolle 18 ausgeübt.

In der in **Fig. 8** gezeigten vergrößerten Ansicht des Details A gemäß Fig. 6 ist die Antriebsstrangbremse 10 und somit die Bedienvorrichtung 14 und die Bremsvorrichtung 12 bei Kurvenfahrt der zwei Förderwagen 2, 4 im jeweiligen Bremszustand dargestellt, der nachfolgend beschrieben wird:
Im dargestellten Bremszustand weist der vorausfahrende erste Förderwagen 2 mit der Bedienvorrichtung 14 zu dem nachfolgenden zweiten Förderwagen 4 mit der Bremsvorrichtung 12 einen Winkelversatz W auf. Der Winkelversatz W resultiert aus der dargestellten Kurvenfahrt der beiden Förderwagen 2, 4, wobei lediglich einer der beiden Förderwagen 2, 4 sich in Kurvenfahrt befinden muss, um den Winkelversatz W zu erzeugen.

In Kurvenfahrt der Förderwagen 2, 4 in einer Rechtskurve betrachtet sind der erste Bremshebel 30 mit dem ersten Reibelement 44 und der erste Flanschabschnitt 52 auf einer kurvenäußeren Seite und der zweite Bremshebel 32 mit dem zweiten Reibelement 46 und der zweite Flanschabschnitt 54 auf einer kurveninneren Seite der Förderwagen 2, 4 angeordnet.

Der erste Förderwagen 2, 4 ist somit im Bereich des ersten Flanschabschnitts 52 weiter von dem zweiten Förderwagen4 entfernt als im Bereich des zweiten Flanschabschnitts 54.

Da sich der Bügel 50 in der Kurvenfahrt mit dem ersten Förderwagen 2 bewegt, ist oder wird bei Einfahrt des ersten Förderwagens 2 in eine Kurve zunächst der erste Flanschabschnitt 52 aus dem Bereich des ersten Bremshebels 30 verschwenkt, wobei der zweite Flanschabschnitt 54 im Bereich des zweiten Bremshebels 32 bleibt. Der zweite Bremshebel 32 ist oder wird vom zweiten Flanschabschnitt 54 gestützt und der erste Bremshebel 30 ist oder wird von der vorgespannten Druckfeder 28 um seinen Drehpunkt 48 verschwenkt und bremst die Gegendruckrolle.

Die Antriebsstrangbremse 10 ist gemäß des zweiten Ausführungsbeispiels derart konfiguriert, dass - in der dargestellten Draufsicht auf eine Einbaulage der Bremshebel 30, 32 gesehen - wenn der erste Förderwagen 2 die Kurvenfahrt im Uhrzeigersinn macht, der erste Bremshebel 30 im Gegenuhrzeigersinn verschwenkt ist oder wird, wobei das kurvenäußere erste Reibelement 44 an das Element des Antriebsstrangs, d.h. die Gegendruckrolle 18, gedrückt ist oder wird.

Nach vollständiger Einfahrt in die Kurve, also wenn auch der zweite Förderwagen 4 bereits in die Kurve eingefahren ist, kann sich der Bremshebel 32 auch aus der vom zweiten Flanschabschnitt 54 gehaltenen Position befreien und über das zweite Reibelement 46 die Gegendruckrolle 18 bremsen. Dies kann so erfolgen, dass der Bügel 50 zusammen mit den beiden Flanschabschnitten 52 und 54 in einer anderen Horizontalebene als die beiden Bremshebel 30, 32 angeordnet sind. So werden die beiden Bremshebel 30, 32 bei Geradeausfahrt lediglich durch die an den jeweiligen bügelabgewandten Enden der Flanschabschnitte 52 und 54 dargestellten vertikalen Vorsprüngen (z.B. Zylinder und/oder Schrauben) zusammengedrückt, nicht aber von den Flanschabschnitten 52 und 54 selber. Nach vollständiger Kurveneinfahrt kann somit auch der Hebel 32 über den Flanschabschnitte 54 hinweg ausgelenkt werden und das Reibelement 46 betätigen.

Allgemein wird, wenn zunächst der erste Förderwagen 2 in die Kurvenfahrt einfährt, zuerst der kurvenäußere Bremshebel verschwenkt, wobei das kurvenäußere Reibelement an das gebremste Element des Antriebsstrangs, hier die Gegendruckrolle 18, gedrückt ist oder wird. Anschließend, also bei voller Kurvenlage beider Förderwagen 2 und 4, wird auch der kurveninnere Bremshebel verschwenkt, wobei zusätzlich auch das kurveninnere Reibelement an das gebremste Element des Antriebsstrangs, hier die Gegendruckrolle 18, gedrückt ist oder wird.

Bei Kurvenausfahrt wird zunächst der kurveninnere Bremshebel verschwenkt und dessen Bremswirkung reduziert bzw. aufgehoben, woraufhin bei vollständiger Geradeausfahrt auch der kurvenäußere Bremshebel verschwenkt und von der Gegendruckrolle 18 gelöst wird.

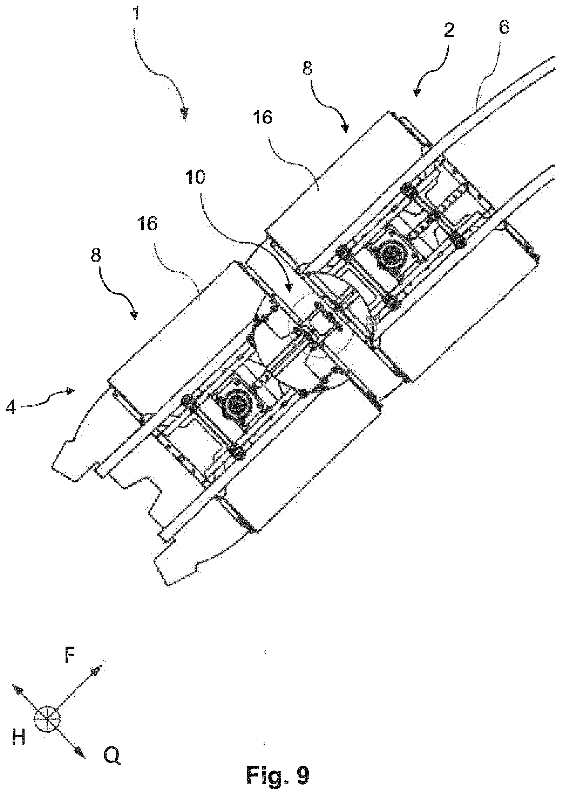

Die in den **Fig. 9** bis **Fig. 12** dargestellte Fördereinrichtung gemäß einem dritten Ausführungsbeispiel der Erfindung mit zwei Förderwagen 2, 4 weicht in der Ausgestaltung der Antriebsstrangbremse 10 von der oben beschriebenen Fördereinrichtung 1 gemäß dem ersten oder zweiten Ausführungsbeispiel ab. Nachfolgend werden die Abweichungen davon beschrieben, wobei gleiche oder ähnliche Bauteile mit denselben Bezeichnungen beschrieben werden.

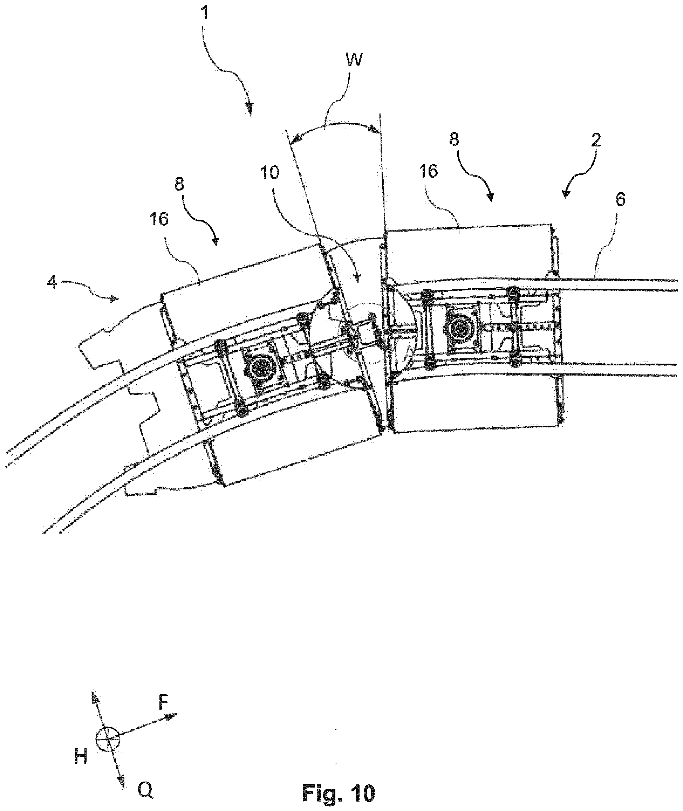

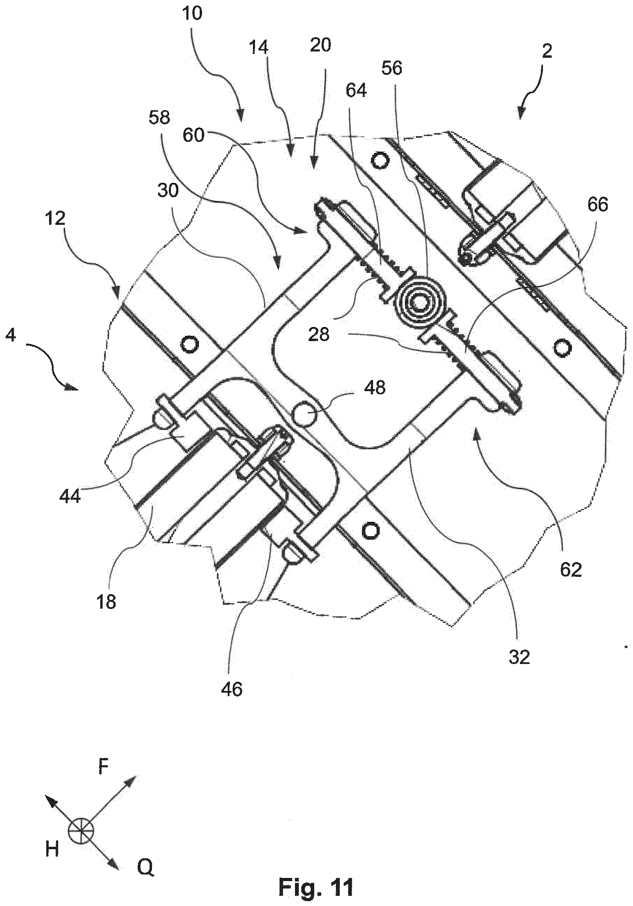

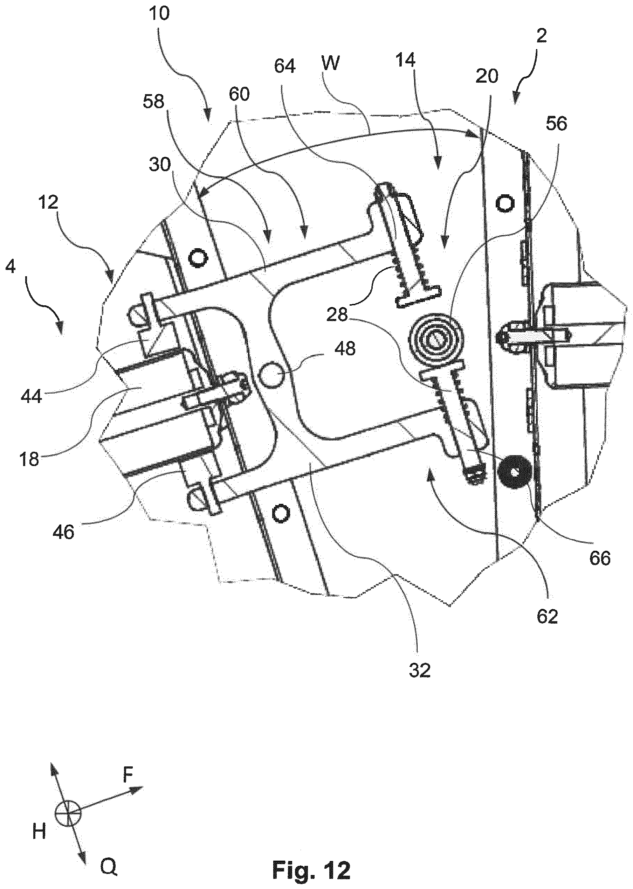

Die in **Fig. 9** in der Draufsicht gezeigten zwei Förderwagen 2, 4 sind in Geradeausfahrt dargestellt und sind zusammen in Förderrichtung F ausgerichtet, weisen also weder einen Querversatz noch einen (in Fig. 10 und Fig. 12 dargestellten) Winkelversatz W zueinander auf. Somit ist die Bremsvorrichtung 12 mittels der Bedienvorrichtung 14 in einen in Fig. 11 vergrößert dargestellten Lösezustand verschwenkt, in dem keine Bremskraft auf das Element des Antriebsstrangs des Quergurtförderers, insbesondere auf die Gegendruckrolle 18, ausgeübt ist.

Bei der in **Fig. 10** dargestellten Draufsicht der Fördereinrichtung gemäß Fig. 9 mit zwei Förderwagen 2, 4 in Kurvenfahrt weisen die Förderwagen 2, 4 einen Winkelversatz W zueinander auf. Somit ist die Bremsvorrichtung 12 mittels der Bedienvorrichtung in einen in Fig. 12 vergrößert dargestellten Bremszustand verschwenkt, in dem eine Bremskraft auf die Gegendruckrolle 18 ausgeübt ist.

In der in **Fig. 11** gezeigten vergrößerten Ansicht des Details B gemäß Fig. 9 ist die Antriebsstrangbremse 10 und somit die Bedienvorrichtung 14 und die Bremsvorrichtung 12 bei Geradeausfahrt der zwei Förderwagen 2, 4 im jeweiligen Lösezustand dargestellt, der nachfolgend beschrieben wird:
Die Bedienvorrichtung 14 weist in dem dritten Ausführungsbeispiel ein Bedienelement 20 auf, das in dem dritten Ausführungsbeispiel als ein Betätiger 56 mit zumindest abschnittsweise zylinderförmiger Betätigungsfläche ausgebildet ist. Alternativ dazu kann der Betätiger 56 mit zumindest abschnittsweise kugelförmiger oder ellipsoidförmiger Betätigungsfläche ausgebildet sein. Der Betätiger 56 ist ohne jeglichen Freiheitgrad an dem ersten Förderwagen 2 angebracht, wobei in Fig. 11 eine Befestigungseinrichtung des Betätigers 56 am ersten Förderwagen 2 nicht dargestellt ist.

Die Bremsvorrichtung 12 weist in dem dritten Ausführungsbeispiel einen ersten Bremshebel 30 und einen einstückig damit ausgebildeten zweiten Bremshebel 32 auf.

Bevorzugt ist somit ein H-förmiger Hebel 58 ausgebildet, der in Querförderrichtung Q voneinander beabstandete und der Bedienvorrichtung 14 zugewandte erste und zweite Endabschnitte 60, 62 aufweist. Die Bremshebel 30, 32 sind mit genau einem rotatorischen Freiheitsgrad um die Hochachse H und ohne einen translatorischen Freiheitsgrad an dem zweiten Förderwagen 4 angebracht.

An den Endabschnitten 60, 62 ist jeweils ein erster und zweiter Stößel 64, 66 mit genau einem translatorischen Freiheitsgrad in Querförderrichtung Q und mit genau einem rotatorischen Freiheitsgrad um die Querförderrichtung Q angeordnet. Alternativ dazu können die Stößel 64, 66 mit genau einem translatorischen Freiheitsgrad in Querförderrichtung Q und ohne einen rotatorischen Freiheitsgrad ausgebildet sein. Der translatorischen Freiheitsgrad kann genutzt werden, um den Querversatz Q in der Kurve über die elastische Feder zum Bremsen zu nutzen. Ohne diesen Freiheitsgrad können Zwangkräfte in der Kurve auftreten. Wodurch eine Vorspannung der elastischen Elemente nur schwer realisierbar wäre.

In dem dritten Ausführungsbeispiel sind die Stößel 64, 66 miteinander fluchtend angeordnet. Weiter sind die Stößel 64, 66 in dem dritten Ausführungsbeispiel jeweils gegen die jeweiligen Endabschnitte 60, 62 des Hebels 58 in Richtung auf das Bedienelement 20, insbesondere den Betätiger 56, mit einer Druckfeder 28 vorgespannt und können den Betätiger 56 zwischen sich aufnehmen. Dabei sind die Druckfedern 28 innerhalb des jeweiligen Stößels 64 und 66 vorgespannt, also zwischen einem dem Betätiger 56 zugewandten Ende und dem Endabschnitt 60, 62 des Hebels 58, ohne Druck auf den Betätiger 56 auszuüben.

Je nach Freiheitsgrad sind die Stößel 64, 66 jeweils als ein, insbesondere einstellbarer, Aufnehmer für die Bewegung des Betätigers 56 in Querförderrichtung Q ausgebildet.

An den Bremshebeln 30, 32, insbesondere an in Förderrichtung F den jeweiligen Endabschnitten 60, 62 gegenüberliegend ausgebildeten Längsabschnitten der Bremshebel, sind jeweils als Gummireibbelag ausgebildete Reibelemente 44, 46 ausgebildet. Die Reibelemente 44, 46 können wie gezeigt derart angeordnet sein, dass sie von einander in Querförderrichtung Q gegenüberliegenden Seiten auf die Gegendruckrolle 18 wirken können. Die Reibelemente 44, 46 haben in dem dargestellten Lösezustand keinen Kontakt mit der Gegendruckrolle 18, es wird also keine Bremskraft auf die Gegendruckrolle 18 ausgeübt.

In der in **Fig. 12** gezeigten vergrößerten Ansicht des Details A gemäß Fig. 10 ist die Antriebsstrangbremse 10 und somit die Bedienvorrichtung 14 und die Bremsvorrichtung 12 bei Kurvenfahrt der zwei Förderwagen 2, 4 im jeweiligen Bremszustand dargestellt, der nachfolgend beschrieben wird:
Im dargestellten Bremszustand weist der vorausfahrende erste Förderwagen 2 mit der Bedienvorrichtung zu dem nachfolgenden zweiten Förderwagen 4 mit der Bremsvorrichtung 12 einen Winkelversatz W auf. Der Winkelversatz W resultiert aus der dargestellten Kurvenfahrt der beiden Förderwagen 2, 4, wobei lediglich einer der beiden Förderwagen 2, 4 sich in Kurvenfahrt befinden muss, um den Winkelversatz W zu erzeugen.

Weiterhin weist der vorausfahrende erste Förderwagen 2 mit der Bedienvorrichtung zu dem nachfolgenden zweiten Förderwagen 4 mit der Bremsvorrichtung 12 einen Querversatz zur Ausrichtung des zweiten Förderwagens 4 auf. Dieser Querversatz resultiert aus der dargestellten Kurvenfahrt der beiden Förderwagen 2, 4, und aktiviert die Antriebsstrangbremse 10.

In Kurvenfahrt der Förderwagen 2, 4 in einer Rechtskurve betrachtet sind der erste Bremshebel 30 mit dem ersten Reibelement 44 und der erste Stößel 64 auf einer kurvenäußeren Seite und der zweite Bremshebel 32 mit dem zweiten Reibelement 46 und der zweite Stößel 66 auf einer kurveninneren Seite der Förderwagen 2, 4 angeordnet.

Der erste Förderwagen 2 ist somit im Bereich des ersten Stößels 64 weiter von dem zweiten Förderwagen 4 entfernt als im Bereich des zweiten Stößels 66.

Bei Einfahrt in die Kurve wird der Betätiger 56 zunächst aus der Kurve bewegt, wodurch kurzzeitig auch der kurvenaußenseitige (hier erste) Stößel 64 gegen die Druckfeder 28 bewegt wird. Dabei ist oder wird ein Abstand zwischen dem Betätiger 56 und dem ersten Stößel 64 geringer und der erste Stößel 64 entlang der Querförderrichtung Q gegen die Druckfeder 28 verschoben.

Bei vollständiger Einfahrt in die Kurve weist der Betätiger 56 einen Querversatz zum Kurveninneren auf, wodurch der kurveninnere (hier zweite) Stößel 66 gegen seine Druckfeder 28 bewegt wird. So ist oder wird bei Erreichen eines vorbestimmten Querversatzes der erste Bremshebel 30 zusammen mit dem zweiten Bremshebel 32 um deren gemeinsamen Drehpunkt 48 verschwenkt. Beim Verschwenken der Bremshebel 30, 32 ist oder wird ein Abstand zwischen dem Betätiger 56 und dem ersten Stößel 64 größer und die Federkraft auf den ersten Stößel 64 verringert. Dabei ist oder wird ein Abstand zwischen dem Betätiger 56 und dem zweiten Stößel 66 geringer und der zweite Stößel 66 entlang der Querförderrichtung Q gegen seine Druckfeder 28 verschoben. Nach Erreichen eines vorbestimmten Querversatzes ist oder wird der zweite Bremshebel 32 für den Rest der vollen Kurvenfahrt zusammen mit dem ersten Bremshebel 30 um deren gemeinsamen Drehpunkt 48 verschwenkt.

Bei Kurvenausfahrt erfolgt kurzzeitig eine noch stärke Stauchung der Druckfeder 28 am kurveninneren Stößel (hier dem zweiten Stößel 66), bevor sich wieder die in Figur 11 gezeigte Situation einstellt.

Die Antriebsstrangbremse 10 ist gemäß des dritten Ausführungsbeispiels derart konfiguriert, dass - in der dargestellten Draufsicht auf eine Einbaulage der Bremshebel 30, 32 gesehen - wenn der erste Förderwagen 2 die Kurvenfahrt im Uhrzeigersinn macht, die Bremshebel 30, 32 zunächst (bei Kurveneinfahrt) kurz im Gegenuhrzeigersinn und danach (bei voller Kurvenfahrt) im Uhrzeigersinn verschwenkt sind oder werden, wobei zunächst das kurvenäußere erste Reibelement 44 an das Element des Antriebsstrangs, insbesondere die Gegendruckrolle 18, gedrückt ist oder wird und danach das kurveninnere zweite Reibelement 46 an das Element des Antriebsstrangs, insbesondere die Gegendruckrolle 18, gedrückt ist oder wird.

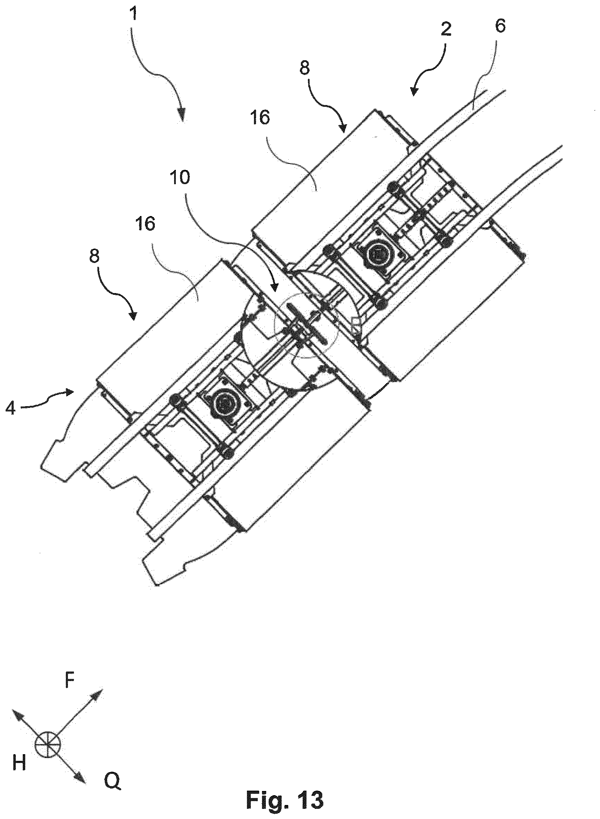

Die in den **Fig. 13** bis **Fig. 16** dargestellte Fördereinrichtung gemäß einem vierten Ausführungsbeispiel der Erfindung mit zwei Förderwagen 2, 4 weicht in der Ausgestaltung der Antriebsstrangbremse 10 von der Fördereinrichtung 1 gemäß den oben beschriebenen Ausführungsbeispielen ab. Nachfolgend werden die Abweichungen davon beschrieben, wobei gleiche oder ähnliche Bauteile mit denselben Bezeichnungen beschrieben werden.

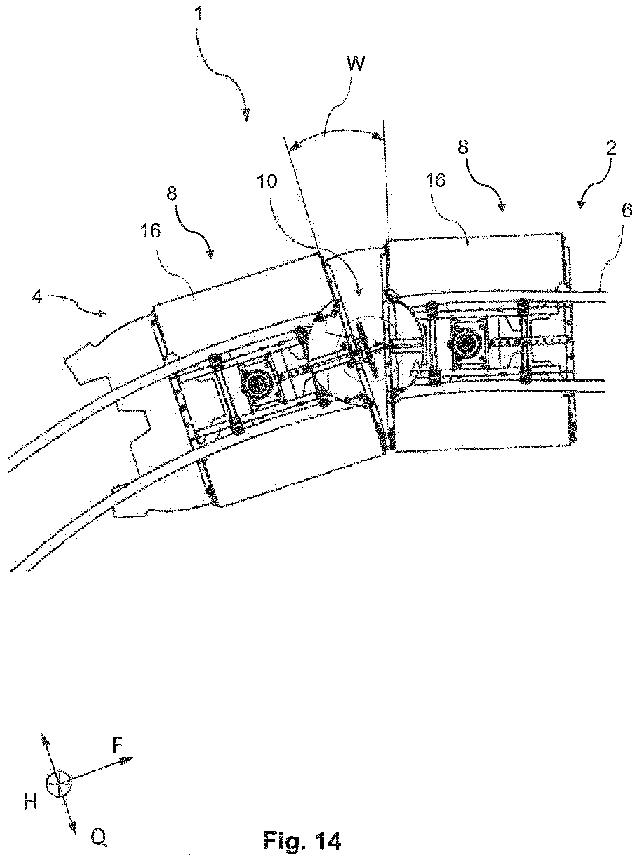

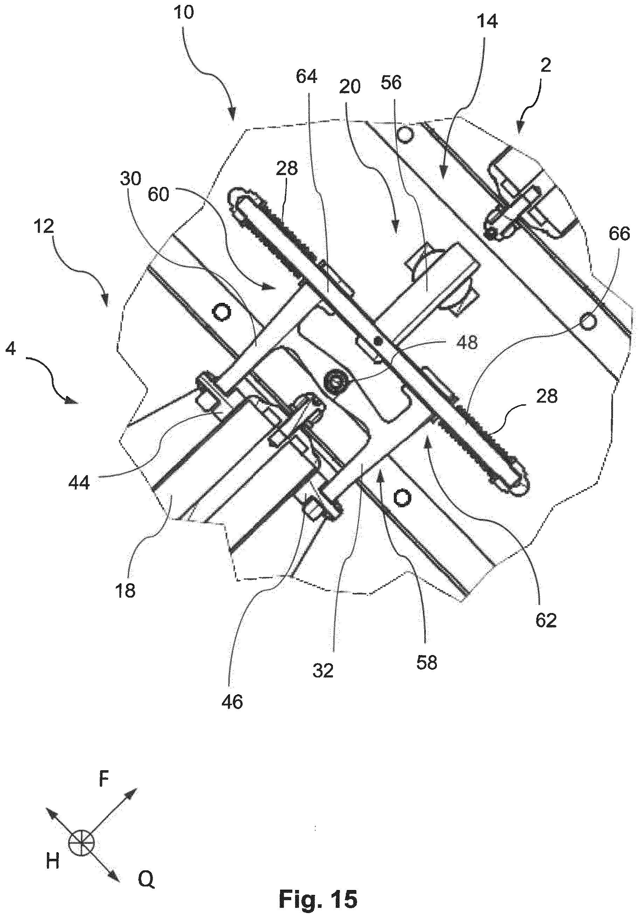

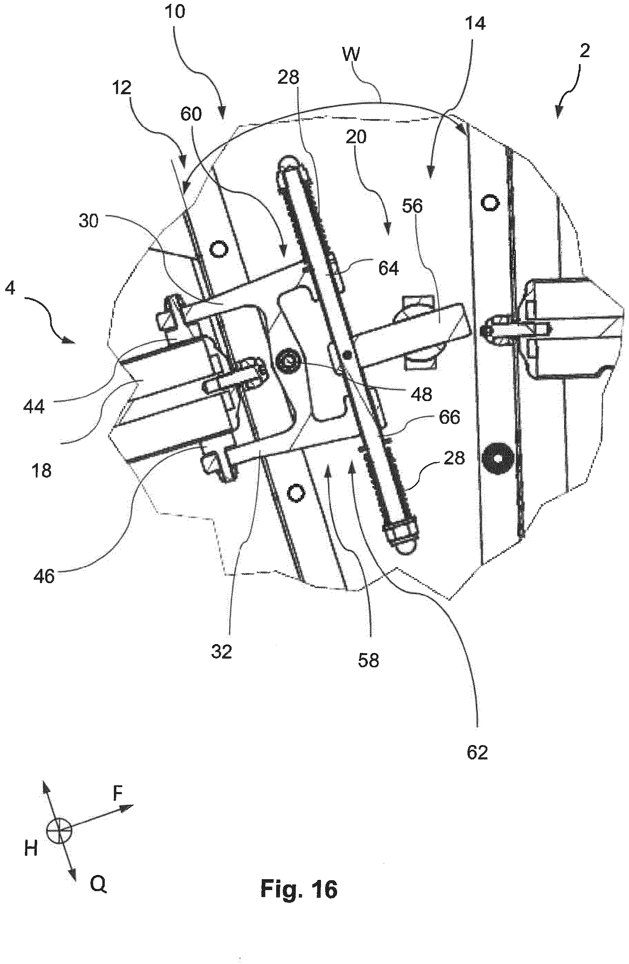

Die in **Fig. 13** in der Draufsicht gezeigten zwei Förderwagen 2, 4 sind in Geradeausfahrt dargestellt und sind zusammen in Förderrichtung F ausgerichtet, weisen also weder einen Querversatz noch einen (in Fig. 14 und Fig. 16 dargestellten) Winkelversatz W zueinander auf. Somit ist die Bremsvorrichtung 12 mittels der Bedienvorrichtung 14 in einen in Fig. 15 vergrößert dargestellten Lösezustand verschwenkt, in dem keine Bremskraft auf das Element des Antriebsstrangs des Quergurtförderers, insbesondere auf die Gegendruckrolle 18, ausgeübt ist.

Bei der in **Fig. 14** dargestellten Draufsicht der Fördereinrichtung 1 gemäß Fig. 13 mit zwei Förderwagen 2, 4 in Kurvenfahrt weisen die Förderwagen 2, 4 einen Winkelversatz W zueinander auf. Weiterhin liegt ein Querversatz zwischen den beiden Förderwagen 2 und 4 vor, der letztendlich die Antriebsstrangbremse 10 betätigt. Somit ist die Bremsvorrichtung 12 mittels der Bedienvorrichtung 14 in einen in Fig. 16 vergrößert dargestellten Bremszustand verschwenkt, in dem eine Bremskraft auf die Gegendruckrolle 18 ausgeübt ist.

In der in **Fig. 15** gezeigten vergrößerten Ansicht des Details B gemäß Fig. 13 ist die Antriebsstrangbremse 10 und somit die Bedienvorrichtung 14 und die Bremsvorrichtung 12 bei Geradeausfahrt der zwei Förderwagen 2, 4 im jeweiligen Lösezustand dargestellt, der nachfolgend beschrieben wird:
Die Bedienvorrichtung 14 weist in dem vierten Ausführungsbeispiel ein Bedienelement 20 auf, das in dem vierten Ausführungsbeispiel als ein Betätiger 56 mit einem freien Endabschnitt ausgebildet ist. Der Betätiger 56 ist an seinem freien Endabschnitt mit drei rotatorischen Freiheitsgraden und genau einem translatorischen Freiheitsgrad in Förderrichtung F an dem ersten Förderwagen 2 angebracht, wobei eine Befestigungseinrichtung des Betätigers 56 mit dem ersten Förderwagen 2 in Fig. 15 nicht dargestellt ist.

Die Bremsvorrichtung 12 weist in dem dritten Ausführungsbeispiel einen ersten Bremshebel 30 und einen einstückig damit ausgebildeten zweiten Bremshebel 32 auf.

Bevorzugt ist somit ein H-förmiger Hebel 58 ausgebildet, der in Querförderrichtung Q voneinander beabstandete und der Bedienvorrichtung 14 zugewandte erste und zweite Endabschnitte 60, 62 aufweist. Die Bremshebel 30, 32 sind mit genau einem rotatorischen Freiheitsgrad um die Hochachse und ohne einen translatorischen Freiheitsgrad an dem zweiten Förderwagen 4 angebracht.

An den Endabschnitten 60, 62 sind ein erster und ein damit einstückig ausgebildeter zweiter Stößel 64, 66 mit genau einem translatorischen Freiheitsgrad in Querförderrichtung Q und mit genau einem rotatorischen Freiheitsgrad um die Querförderrichtung Q angeordnet.

In dem vierten Ausführungsbeispiel sind die Stößel 64, 66 miteinander fluchtend angeordnet und stehen mit ihren freien Enden über die Endabschnitte 60, 62 des Hebels 58 über. Weiter sind die Stößel 64, 66 in dem vierten Ausführungsbeispiel an ihren freien Enden mit jeweils einer Druckfeder 28 gegen jeweils eine Scheibe an einem Absatz der Stößel 64, 66 vorgespannt, ähnlich wie beim ersten Ausführungsbeispiel. Die Vorspannung ist somit jeweils innerhalb der Stößel 64, 66 aufgebaut, ohne Belastung des Betätigers 56. Die jeweiligen Endabschnitte 60, 62 des Hebels 58 sind etwa in Querförderrichtung Q in der Mitte der Stößel 64, 66 mit dem Betätiger 56 fest gekoppelt. So kann erst durch einen Querversatz der Betätiger 56 auf die Feder drücke, wodurch dann sofort die vorgespannte Kraft auf die Antriebsstrangbremse 10 wirken kann.

An den Bremshebeln 30, 32, insbesondere an in Förderrichtung F den jeweiligen Endabschnitten 60, 62 gegenüberliegend ausgebildeten Längsabschnitten der Bremshebel 30, 32, sind jeweils als Gummireibbelag ausgebildete erste und zweite Reibelemente 44, 46 derart angeordnet, dass sie von einander in Querförderrichtung Q gegenüberliegenden Seiten auf die Gegendruckrolle 18 wirken können. Die Reibelemente 44, 46 haben in dem dargestellten Lösezustand keinen Kontakt mit der Gegendruckrolle 18, es wird also keine Bremskraft auf die Gegendruckrolle 18 ausgeübt.

In der in **Fig. 16** gezeigten vergrößerten Ansicht des Details A gemäß Fig. 14 ist die Antriebsstrangbremse 10 und somit die Bedienvorrichtung 14 und die Bremsvorrichtung 12 bei Kurvenfahrt der zwei Förderwagen 2, 4 im jeweiligen Bremszustand dargestellt, der nachfolgend beschrieben wird:
Im dargestellten Bremszustand weist der vorausfahrende erste Förderwagen 2 mit der Bedienvorrichtung 14 zu dem nachfolgenden zweiten Förderwagen 4 mit der Bremsvorrichtung 12 einen Winkelversatz W auf. Der Winkelversatz W resultiert aus der dargestellten Kurvenfahrt der beiden Förderwagen 2, 4, wobei lediglich einer der beiden Förderwagen 2, 4 sich in Kurvenfahrt befinden muss, um den Winkelversatz W zu erzeugen. Entscheidend für die Bremswirkung ist aber der Querversatz der beiden Förderwagen 2 und 4, der bei Kurvenfahrt auftritt.

In Kurvenfahrt der Förderwagen 2, 4 in einer Rechtskurve betrachtet sind der erste Bremshebel 30 mit dem ersten Reibelement 44 und der erste Stößel 64 auf einer kurvenäußeren Seite und der zweite Bremshebel 32 mit dem zweiten Reibelement 46 und der zweite Stößel 66 auf einer kurveninneren Seite der Förderwagen 2, 4 angeordnet.

Der erste Förderwagen 2 ist somit im Bereich des ersten Stößels 64 weiter von dem zweiten Förderwagen 4 entfernt als im Bereich des zweiten Stößels 66.

Da sich der Betätiger 56 in der Kurvenfahrt mit dem ersten Förderwagen 2 bewegt, werden die Stößel 64, 66 entlang der Querförderrichtung Q bei Kurveneinfahrt zunächst zum Kurvenäußeren gegen die Druckfeder 28 am kurveninneren freien Ende des jeweiligen Stößels 64, 66 verschoben, was eine Bremswirkung des kurvenäußeren Reibelements 44 bzw. 46 bewirken kann.

Bei voller Kurvenfahrt, also wenn z.B. beide Förderwagen 2 und 4 in die Kurve eingefahren sind und/oder ein vorbestimmter Querversatz erreicht ist, ist oder wird der erste Bremshebel 30 zusammen mit dem zweiten Bremshebel 32 um deren gemeinsamen Drehpunkt 48 verschwenkt. Beim Verschwenken der Bremshebel 30, 32 ist oder wird die Federkraft der Druckfeder 28 am kurveninneren freien Ende des jeweiligen Stößels 64, 66 verringert. Dabei sind oder werden die Stößel 64, 66 entlang der Querförderrichtung Q gegen die Druckfeder 28 am kurvenäußeren freien Ende des jeweiligen Stößels 64, 66 verschoben. Nach Erreichen eines vorbestimmten Querversatzes ist oder wird der zweite Bremshebel 32 für den Rest der Kurvenfahrt zusammen mit dem ersten Bremshebel 30 um deren gemeinsamen Drehpunkt 48 verschwenkt. Dabei erfolgt eine Bremswirkung über das kurveninnere Reibelement (in der Figur 16 das Reibelement 46) unter Stauchung der kurvenäußeren Druckfeder 28.

Bei Kurvenausfahrt erfolgt zunächst eine noch stärkere Stauchung der kurvenäußeren Druckfeder 28, bevor sich wieder die in Figur 15 gezeigte Situation einstellt.

Die Antriebsstrangbremse 10 ist gemäß des vierten Ausführungsbeispiels derart konfiguriert, dass - in der dargestellten Draufsicht auf eine Einbaulage der Bremshebel 30, 32 gesehen - wenn der erste Förderwagen 2 die Kurvenfahrt im Uhrzeigersinn macht, die Bremshebel 30, 32 zunächst (bei Kurveneinfahrt) im Gegenuhrzeigersinn und danach (bei voller Kurvenfahrt) im Uhrzeigersinn verschwenkt sind oder werden, wobei zunächst (bei Kurveneinfahrt) das kurvenäußere erste Reibelement 44 an das Element des Antriebsstrangs, insbesondere die Gegendruckrolle 18, gedrückt ist oder wird und danach (bei voller Kurvenfahrt) das kurveninnere zweite Reibelement 46 an das Element des Antriebsstrangs, insbesondere die Gegendruckrolle 18, gedrückt ist oder wird.

### Bezugszeichenliste

- 1: Fördereinrichtung
- 2: erster Förderwagen
- 4: zweiter Förderwagen
- 6: Transportschiene
- 8: Quergurtförderer
- 10: Antriebsstrangbremse
- 12: Bremsvorrichtung
- 14: Bedienvorrichtung
- 16: Quergurt
- 18: Gegendruckrolle
- 20: Bedienelement
- 22: erster Zugstab
- 24: zweiter Zugstab
- 26: Flanschlager mit Kugelkalotte
- 28: elastisches Element, insbesondere Druckfeder
- 30: erster Bremshebel
- 32: zweiter Bremshebel
- 34: Quersteg des T-förmigen Hebels
- 36: erster Endabschnitt des T-förmigen Hebels
- 38: zweiter Endabschnitt des T-förmigen Hebels
- 40: Längssteg des T-förmigen Hebels
- 42: Kugelgelenkkopf
- 44: erstes Reibelement
- 46: zweites Reibelement
- 48: Drehpunkt
- 50: Bügel
- 52: erster Flanschabschnitt
- 54: zweiter Flanschabschnitt
- 56: Betätiger
- 58: H-förmiger Hebel
- 60: erster Endabschnitt des H-förmigen Hebels
- 62: zweiter Endabschnitt des H-förmigen Hebels
- 64: erster Stößel
- 66: zweiter Stößel
- F: Förderrichtung
- H: Hochachse
- Q: Querförderrichtung
- W: Winkelversatz

## Patentansprüche

1. Fördereinrichtung (1) mit:
mindestens einem ersten und einem zweiten Förderwagen (2, 4), die in Förderrichtung (F) hintereinander angeordnet sind,
einem an mindestens dem zweiten Förderwagen (4) ausgebildeten Quergurtförderer (8) zum Fördern von Fördergut in einer im Wesentlichen quer zur Förderrichtung (F) ausgerichteten Querförderrichtung (Q), **dadurch gekennzeichnet, dass** die Fördereinrichtung eine Antriebsstrangbremse (10) für den Quergurtförderer (8) aufweist,
wobei die Antriebsstrangbremse (10) eine Bremsvorrichtung (12) und eine Bedienvorrichtung (14) für die Bremsvorrichtung (12) aufweist, wobei die Bedienvorrichtung (14) an dem ersten Förderwagen (2) und die Bremsvorrichtung (12) an dem zweiten Förderwagen (4) angeordnet ist,
wobei die Bremsvorrichtung (12) in einen Bremszustand bringbar ist, in dem die Bremsvorrichtung (12) eine Bremskraft auf ein Element eines Antriebsstrangs (18) des Quergurtförderers (8) ausübt, und in einen Lösezustand bringbar ist, in dem die Bremsvorrichtung (12) keine oder eine reduzierte Bremskraft auf ein Element eines Antriebsstrangs (18) des Quergurtförderers (8) ausübt,
wobei die Bedienvorrichtung (14) und die Bremsvorrichtung (12) derart zusammenwirken, dass bei einer im Wesentlichen Geradeausfahrt des ersten und zweiten Förderwagens (2, 4) die Bremsvorrichtung (12) den Lösezustand einnimmt und bei einer Kurvenfahrt mindestens eines der Förderwagen (2, 4) die Bremsvorrichtung (12) den Bremszustand einnimmt, um eine Bewegung eines Quergurts (16) des Quergurtförderers (8) in Querförderrichtung (Q) bei Geradeausfahrt zuzulassen und bei Kurvenfahrt zu bremsen.

2. Fördereinrichtung (1) nach Anspruch 1, wobei der erste Förderwagen (2) mit der daran angeordneten Bedienvorrichtung (14) dem zweiten Förderwagen (4) mit der Bremsvorrichtung (12) in Förderrichtung (F) vorausfahrend angeordnet ist.

3. Fördereinrichtung (1) nach Anspruch 1 oder 2, wobei die Bremsvorrichtung (12) einen ersten Bremshebel (30) mit einem daran angeordneten ersten Reibelement (44) aufweist, wobei der erste Bremshebel (30) an dem zweiten Förderwagen (4) schwenkbar gelagert ist und wobei im Bremszustand der Bremsvorrichtung (12) der erste Bremshebel (30) derart verschwenkt ist, dass das erste Reibelement (44) an das Element des Antriebsstrangs (18) gedrückt ist.

4. Fördereinrichtung (1) nach Anspruch 3, wobei die Antriebsstrangbremse (10) mindestens ein elastisches Element (28) aufweist, mittels dessen Federkraft der erste Bremshebel (30) im Bremszustand verschwenkt ist.

5. Fördereinrichtung (1) nach Anspruch 4, wobei das elastische Element (28) innerhalb eines Bauteils der Bremsvorrichtung (12) vorgespannt ist.

6. Fördereinrichtung (1) nach einem der Ansprüche 3 bis 5, wobei das Element des Antriebsstrangs eine Gegendruckrolle (18) für eine Reibrolle zum Antrieb des Quergurts (16) ist.

7. Fördereinrichtung (1) nach einem der Ansprüche 3 bis 6, wobei der erste Bremshebel (30) mit genau einem rotatorischen Freiheitsgrad um eine Hochachse (H), die senkrecht zu der Förderrichtung (F) und senkrecht zu der Querförderrichtung (Q) ausgerichtet ist und ohne einen translatorischen Freiheitsgrad an dem zweiten Förderwagen (4) angebracht ist.

8. Fördereinrichtung (1) nach einem der vorherigen Ansprüche, wobei der erste Bremshebel (30) mittels der Bedienvorrichtung (14) in den Bremszustand und/oder in den Lösezustand verschwenkbar ist.

9. Fördereinrichtung (1) nach mindestens einem der vorherigen Ansprüche, wobei die Antriebsstrangbremse (10) derart konfiguriert ist, dass die Bremsvorrichtung (12) mittels der Bedienvorrichtung (14) bei einem Querversatz und/oder Winkelversatz (W) der Förderwagen (2, 4) zueinander in den Bremszustand gebracht ist.

10. Fördereinrichtung (1) nach mindestens einem der vorherigen Ansprüche, wobei die Antriebsstrangbremse (10) derart konfiguriert ist, dass die Bedienvorrichtung (14) die Bremsvorrichtung (12) ohne Querversatz und Winkelversatz (W) der Förderwagen (2, 4) zueinander in den Lösezustand bringt.

11. Fördereinrichtung (1) nach mindestens einem der Ansprüche 3 bis 10, wobei die Bremsvorrichtung (12) zusätzlich zu dem ersten Bremshebel (30) einen zweiten Bremshebel (32) mit einem daran angeordneten zweiten Reibelement (46) aufweist, wobei bevorzugt der erste Bremshebel (30) einstückig mit dem zweiten Bremshebel (32) ausgebildet ist, und wobei die Bremshebel (30, 32) auf einander gegenüberliegenden Seiten des Elements des Antriebsstrangs (18) angeordnet sind.

12. Fördereinrichtung (1) nach mindestens einem der Ansprüche 1 bis 11, wobei die Bedienvorrichtung (14) ein oder mehrere Bedienelemente (20) aufweist, das/die mit jeweils mindestens zwei rotatorischen Freiheitsgraden um die Hochachse (H) und um die Querförderrichtung (Q) und mit genau einem im Lösezustand etwa parallel zur Förderrichtung (F) ausgerichteten translatorischen Freiheitsgrad an dem ersten Förderwagen (2) angebracht ist/sind.

13. Fördereinrichtung (1) nach mindestens einem der Ansprüche 1 bis 11, wobei die Bedienvorrichtung (14) ein Bedienelement (20) aufweist, das ohne Freiheitsgrad an dem ersten Förderwagen (2) angebracht ist.

## Claims

1. A conveying device (1) having:
at least one first and one second conveying carriage (2, 4) which are arranged one behind the other in a conveying direction (F),
a transverse-belt conveyor (8) which is formed on at least the second conveying carriage (4) and which serves for conveying material for conveying in a transverse conveying direction (Q) oriented substantially transversely with respect to the conveying direction (F),
**characterized in**
**that** the conveying device has a drivetrain brake (10) for the transverse-belt conveyor (8), wherein the drivetrain brake (10) has a brake apparatus (12) and an operating apparatus (14) for the brake apparatus (12), wherein the operating apparatus (14) is arranged on the first conveying carriage (2) and the brake apparatus (12) is arranged on the second conveying carriage (4),
wherein the brake apparatus (12) can be placed into a braking state in which the brake apparatus (12) exerts a braking force on an element of a drivetrain (18) of the transverse-belt conveyor (8), and can be placed into a release state, in which the brake apparatus (12) exerts no or a reduced braking force on an element of a drivetrain (18) of the transverse-belt conveyor (8),
wherein the operating apparatus (14) and the brake apparatus (12) interact such that, during substantially straight-ahead travel of the first and second conveying carriage (2, 4), the brake apparatus (12) assumes the release state and, during travel of at least one of the conveying carriages around a curve, the brake apparatus (12) assumes the braking state, in order to allow a movement of a transverse belt (16) of the transverse-belt conveyor (8) in the transverse conveying direction (Q) during straight-ahead travel and to brake such a movement during travel around a curve.

2. The conveying device (1) as claimed in claim 1, wherein the first conveying carriage (2) with the operating apparatus (14) arranged thereon is arranged so as to travel ahead, in the conveying direction (F), of the second conveying carriage (4) with the brake apparatus (12).

3. The conveying device (1) as claimed in claim 1 or 2, wherein the brake apparatus (12) has a first brake lever (30) with a first friction element (44) arranged thereon, wherein the first brake lever (30) is mounted pivotably on the second conveying carriage (4) and wherein, in the braking state of the brake apparatus (12), the first brake lever (30) is pivoted such that the first friction element (44) is pressed against the element of the drivetrain (18).

4. The conveying device (1) as claimed in claim 3, wherein the drivetrain brake (10) has at least one elastic element (28), by means of the spring force of which the first brake lever (30) is pivoted in the braking state.

5. The conveying device (1) as claimed in claim 4, wherein the elastic element (28) is preloaded within a component of the brake apparatus (12).

6. The conveying device (1) as claimed in any of claims 3 to 5, wherein the element of the drivetrain is a counterpressure roller (18) for a friction roller for driving the transverse belt (16).

7. The conveying device (1) as claimed in any of claims 3 to 6, wherein the first brake lever (30) is attached with exactly one rotational degree of freedom, about a vertical axis (H) which is oriented perpendicular to the conveying direction (F) and perpendicular to the transverse conveying direction (Q), and without a translational degree of freedom, to the second conveying carriage (4).

8. The conveying device (1) as claimed in any of the preceding claims, wherein the first brake lever (30) is pivotable by means of the operating apparatus (14) into the braking state and/or into the release state.

9. The conveying device (1) as claimed in at least one of the preceding claims, wherein the drivetrain brake (10) is configured such that the brake apparatus (12) is placed into the braking state by means of the operating apparatus (14) in the presence of a transverse offset and/or angular offset (W) of the conveying carriages (2, 4) with respect to one another.

10. The conveying device (1) as claimed in at least one of the preceding claims, wherein the drivetrain brake (10) is configured such that the operating apparatus (14) places the brake apparatus (12) into the release state in the absence of a transverse offset and angular offset (W) of the conveying carriages (2, 4) with respect to one another.

11. The conveying device (1) as claimed in at least one of claims 3 to 10, wherein the brake apparatus (12) has, in addition to the first brake lever (30), a second brake lever (32) with a second friction element (46) arranged thereon, wherein, preferably, the first brake lever (30) is formed as a single piece with the second brake lever (32), and wherein the brake levers (30, 32) are arranged on mutually opposite sides of the element of the drivetrain (18).

12. The conveying device (1) as claimed in at least one of claims 1 to 11, wherein the operating apparatus (14) has one or more operating elements (20) which is or are attached with in each case at least two rotational degrees of freedom, about the vertical axis (H) and about the transverse conveying direction (Q), and with exactly one translational degree of freedom, which in the release state is oriented approximately parallel to the conveying direction (F), to the first conveying carriage (2).

13. The conveying device (1) as claimed in at least one of claims 1 to 11, wherein the operating apparatus (14) has an operating element (20) which is attached without a degree of freedom to the first conveying carriage (2).

## Revendications

1. Dispositif de transport (1), comprenant :
au moins un premier et un deuxième chariot (2, 4) qui sont disposés l'un après l'autre dans la direction de transport (F),
un convoyeur à courroie transversale (8) réalisé sur au moins le deuxième chariot (4) pour transporter des produits à transporter dans une direction de transport transversale (Q) orientée de manière substantiellement transversale à la direction de transport (F),
**caractérisé en ce que** le dispositif de transport présente un frein de chaîne cinématique (10) destiné au convoyeur à courroie transversale (8),
le frein de chaîne cinématique (10) présentant un dispositif de freinage (12) et un dispositif de commande (14) destiné au dispositif de freinage (12), le dispositif de commande (14) étant disposé sur le premier chariot (2) et le dispositif de freinage (12) étant disposé sur le deuxième chariot (4),
le dispositif de freinage (12) pouvant être mis dans un état de freinage dans lequel le dispositif de freinage (12) exerce une force de freinage sur un élément d'une chaîne cinématique (18) du convoyeur à courroie transversale (8), et dans un état de desserrage dans lequel le dispositif de freinage (12) n'exerce aucune force de freinage ou exerce une force de freinage réduite sur un élément d'une chaîne cinématique (18) du convoyeur à courroie transversale (8),
le dispositif de commande (14) et le dispositif de freinage (12) coopérant de telle sorte que lors d'un déplacement substantiellement en ligne droite du premier et du deuxième chariot (2, 4), le dispositif de freinage (12) adopte l'état de desserrage, et lors d'un déplacement en virage d'au moins l'un des chariots (2, 4), le dispositif de freinage (12) adopte l'état de freinage afin de permettre un mouvement d'une courroie transversale (16) du convoyeur à courroie transversale (8) dans la direction de transport transversale (Q) en cas de déplacement en ligne droite et de freiner en cas de déplacement en virage.

2. Dispositif de transport (1) selon la revendication 1, dans lequel le premier chariot (2) pourvu du dispositif de commande (14) disposé sur celui-ci est disposé en précédant le deuxième chariot (4) pourvu du dispositif de freinage (12) dans la direction de transport (F).

3. Dispositif de transport (1) selon la revendication 1 ou 2, dans lequel le dispositif de freinage (12) présente un premier levier de frein (30) pourvu d'un premier élément de friction (44) disposé sur celui-ci, le premier levier de frein (30) étant monté pivotant sur le deuxième chariot (4), et dans lequel, à l'état de freinage du dispositif de freinage (12), le premier levier de frein (30) est pivoté de telle sorte que le premier élément de friction (44) est poussé contre l'élément de la chaîne cinématique (18).

4. Dispositif de transport (1) selon la revendication 3, dans lequel le frein de chaîne cinématique (10) présente au moins un élément élastique (28) au moyen duquel la force de ressort de celui-ci fait pivoter le premier levier de frein (30) à l'état de freinage.

5. Dispositif de transport (1) selon la revendication 4, dans lequel l'élément élastique (28) est précontraint à l'intérieur d'un composant du dispositif de freinage (12).

6. Dispositif de transport (1) selon l'une quelconque des revendications 3 à 5, dans lequel l'élément de la chaîne cinématique est un rouleau de contrepression (18) pour un galet de friction servant à l'entraînement de la courroie transversale (16).

7. Dispositif de transport (1) selon l'une quelconque des revendications 3 à 6, dans lequel le premier levier de frein (30) est fixé au deuxième chariot de transport (4) avec exactement un degré de liberté en rotation autour d'un axe vertical (H) qui est orienté perpendiculairement à la direction de transport (F) et perpendiculairement à la direction de transport transversale (Q) et sans aucun degré de liberté en translation.

8. Dispositif de transport (1) selon l'une quelconque des revendications précédentes, dans lequel le premier levier de frein (30) peut être pivoté au moyen du dispositif de commande (14) vers l'état de freinage et/ou vers l'état de desserrage.

9. Dispositif de transport (1) selon au moins l'une des revendications précédentes, dans lequel le frein de chaîne cinématique (10) est configuré de telle sorte que le dispositif de freinage (12) est mis dans l'état de freinage au moyen du dispositif de commande (14) en cas de décalage transversal et/ou de décalage angulaire (W) des chariots (2, 4) l'un par rapport à l'autre.

10. Dispositif de transport (1) selon au moins l'une des revendications précédentes, dans lequel le frein de chaîne cinématique (10) est configuré de telle sorte que le dispositif de commande (14) met le dispositif de freinage (12) dans l'état de desserrage sans décalage transversal ni décalage angulaire (W) des chariots (2, 4) l'un par rapport à l'autre.

11. Dispositif de transport (1) selon au moins l'une des revendications 3 à 10, dans lequel le dispositif de freinage (12) présente en plus du premier levier de frein (30) un deuxième levier de frein (32) pourvu d'un deuxième élément de friction (46) disposé sur celui-ci, dans lequel de préférence le premier levier de frein (30) est réalisé d'un seul tenant avec le deuxième levier de frein (32), et dans lequel les leviers de frein (30, 32) sont disposés sur des côtés mutuellement opposés de l'élément de la chaîne cinématique (18).

12. Dispositif de transport (1) selon au moins l'une des revendications 1 à 11, dans lequel le dispositif de commande (14) présente un ou plusieurs éléments de commande (20) qui sont fixés au premier chariot (2) avec respectivement au moins deux degrés de liberté en rotation autour de l'axe vertical (H) et autour de la direction de transport transversale (Q) et avec exactement un degré de liberté en translation orienté à l'état de desserrage de manière approximativement parallèle à la direction de transport (F).

13. Dispositif de transport (1) selon au moins l'une des revendications 1 à 11, dans lequel le dispositif de commande (14) présente un élément de commande (20) qui est fixé au premier chariot (2) sans aucun degré de liberté.
